(19) **Europäisches Patentamt**
**European Patent Office**
**Office européen des brevets**

(11) **EP 3 079 792 B1**

(12) **FASCICULE DE BREVET EUROPEEN**

(45) Date de publication et mention
de la délivrance du brevet:
**07.02.2018 Bulletin 2018/06**

(21) Numéro de dépôt: **14827492.1**

(22) Date de dépôt: **10.12.2014**

(51) Int Cl.:
**B01D 35/153** (2006.01)     **B01D 37/02** (2006.01)

(86) Numéro de dépôt international:
**PCT/FR2014/053260**

(87) Numéro de publication internationale:
**WO 2015/086996 (18.06.2015 Gazette 2015/24)**

(54) **FILTRE À CARBURANT AVEC DISPOSITIF DE LIBÉRATION D'ADDITIF**

KRAFTSTOFFFILTER MIT ADDITIVAUSGABEVORRICHTUNG

FUEL FILTER WITH ADDITIVE RELEASE DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.12.2013 FR 1362533**

(43) Date de publication de la demande:
**19.10.2016 Bulletin 2016/42**

(73) Titulaires:
• **SOGEFI FILTRATION**
**78280 Guyancourt (FR)**
• **Rhodia Operations**
**75009 Paris (FR)**

(72) Inventeurs:
• **FALC'HON, Jean-Jacques**
**F-78140 Velizy Villacoublay (FR)**
• **GUILLON, Christophe**
**F-14500 Vire (FR)**
• **MONSALLIER, Guy**
**F-50400 Granville (FR)**
• **HARLE, Virginie**
**F-60300 Senlis (FR)**
• **LACARRIERE, Antoine**
**F-92110 Clichy (FR)**

(74) Mandataire: **Cabinet Plasseraud**
**66, rue de la Chaussée d'Antin**
**75440 Paris Cedex 09 (FR)**

(56) Documents cités:
**WO-A1-2012/104552     US-A1- 2009 206 024
US-A1- 2012 325 752**

**Description**

DOMAINE TECHNIQUE DE L'INVENTION

La présente invention est relative aux filtres à carburant équipant les moteurs à combustion interne de véhicules, et en particulier aux filtres à gazole du type permettant de libérer un additif liquide pour carburant.

ARRIERE-PLAN TECHNOLOGIQUE DE L'INVENTION

Un filtre à carburant du genre précité comprend typiquement une entrée et une sortie de carburant, et permet, dans un circuit d'alimentation en gazole pour moteur diesel, de filtrer le gazole pour le débarrasser de ses impuretés. Le réservoir d'additif est logé dans le boîtier de filtre et contient un additif liquide améliorant la qualité du carburant et en particulier la distribution du carburant dans le moteur, des performances du fonctionnement du moteur, la stabilité du fonctionnement du moteur et/ou facilitant la régénération du filtre à particules. Ce genre d'additif liquide est typiquement utile pour améliorer la durabilité du moteur. Le document WO 2012/104552 décrit un tel type de filtre et des exemples non limitatifs d'additif liquide sont exposés notamment en fin de description de ce document.

Il est intéressant de pouvoir diffuser l'additif liquide sans avoir recours à des pompes doseuses de grande précision ni gérer une unité de calcul associée, afin de réduire le coût du dispositif de distribution d'additif.

Un avantage du mode de distribution décrit dans le document WO 2012/104552 est de pouvoir allonger l'autonomie du réservoir d'additif en limitant l'apport en additif ou même en l'arrêtant pour éviter, sous certaines conditions, une concentration excessive d'additif dans le carburant. Il permet en outre d'optimiser la concentration en additif dans le carburant afin de trouver un compromis entre la quantité nécessaire suffisante et une surconcentration pouvant réduire l'autonomie du réservoir d'additif et/ou avoir des répercussions négatives sur d'autres organes du véhicule, tel qu'un encrassement du filtre à particules. Pour cela, l'additif liquide est diffusé sous l'effet d'une différence de pression, cet additif étant placé dans une poche souple ou enveloppe interne à paroi mobile étanche et mis à une pression identique à celle du carburant placé à l'intérieur d'une enveloppe externe de l'enceinte d'additif. Typiquement, la différence de pression peut résulter d'une surpression exercée par le carburant ou d'une dépression à proximité d'un orifice de distribution du liquide d'additif.

Un ensemble combinant un élément filtrant, une enceinte d'additif, et un dispositif actionneur pour autoriser la libération d'additif est cependant relativement complexe à assembler, en particulier si l'on souhaite pouvoir changer l'élément filtrant et/ou l'enceinte d'additif et bénéficier des avantages d'une filtration de l'extérieur vers l'intérieur (sens centripète avec une plus grande surface de média filtrant du côté amont). De plus, il apparaît difficile d'obtenir une conception compacte du filtre lorsqu'on veut bloquer efficacement la diffusion d'additif (typiquement à l'arrêt du moteur) et optimiser l'autonomie et/ou la contenance du réservoir d'additif.

DESCRIPTION GENERALE DE L'INVENTION

La présente invention a pour but de proposer un filtre à carburant avec dispositif de libération d'additif qui soit plus attractif pour la problématique d'installation dans l'environnement encombré d'un moteur à explosion d'un véhicule automobile.

A cet effet, il est proposé selon l'invention un filtre à carburant comportant :

- un boîtier s'étendant entre une première extrémité qui définit un fond et une deuxième extrémité formée par un couvercle, le boîtier délimitant un volume intérieur et présentant une entrée de carburant brut et une sortie de carburant filtré ;
- un élément filtrant qui est disposé dans le volume intérieur et qui comporte une première extrémité axiale engagée contre le couvercle, une deuxième extrémité axiale et un média filtrant sensiblement annulaire s'étendant entre la première extrémité axiale et la deuxième extrémité axiale, le média filtrant ayant une face interne qui délimite un espace intérieur ;
- un réservoir d'additif contenant un additif liquide adapté pour être mélangé avec du carburant ; et
- un dispositif de libération d'additif pour distribuer l'additif liquide du réservoir dans un circuit de circulation de carburant pour moteur à combustion interne, le dispositif de libération d'additif comprenant un canal de distribution et au moins un composant actionneur pour sélectivement obturer (totalement ou partiellement) le canal de distribution, sachant qu'au moins pour une position d'ouverture du composant actionneur, le canal de distribution est en communication fluidique avec le réservoir d'additif et débouche dans un canal de carburant du couvercle de plus grande section transversale que le canal de distribution ;
  sachant que le dispositif de libération d'additif s'étend au moins partiellement dans l'espace intérieur, le composant actionneur s'étendant dans cet espace intérieur, et de préférence à distance de la deuxième extrémité du boîtier.

Grâce à ces dispositions, l'espace intérieur est utilisé de façon optimale et l'enceinte d'additif peut être au moins aussi large que l'élément filtrant. Le canal de distribution d'additif, typiquement étanche aux liquides, peut traverser le composant actionneur dans l'espace intérieur et s'étendre suivant une même direction générale (sens de la longueur du composant actionneur). La connexion avec le réservoir d'additif peut en outre être réalisée dans une zone interne de l'élément filtrant, ce qui limite le risque de contact par inadvertance d'un utilisateur avec la sortie du réservoir d'additif.

Le composant actionneur, typiquement alimenté de manière électrique, peut se raccorder à la deuxième extrémité du boîtier, dans une position avantageusement plus centrale (plus proche de l'axe longitudinal de l'élément filtrant) que l'entrée et respectivement la sortie de carburant. Le couvercle peut inclure des éléments annulaires pour la séparation étanche entre plusieurs zones de circulation, par exemple entre la zone centrale traversée par le canal de distribution d'additif (et dans laquelle on peut avoir l'éventuel raccordement électrique), une zone intermédiaire pour le passage du carburant filtré, et une zone excentrée pour le passage du carburant brut.

Selon une particularité, le dispositif de libération d'additif est solidaire d'une partie du boîtier choisie parmi le couvercle et le fond et fixe en translation selon un axe longitudinal de l'élément filtrant par rapport à cette partie de boîtier. Ainsi, l'élément filtrant au moins peut être aisément changé en le séparant de la partie de boîtier qui embarque le dispositif de libération d'additif.

Selon une particularité, l'orifice de passage de carburant communique avec ledit espace intérieur. Ainsi, il est permis d'acheminer du carburant filtré de manière centripète à l'intérieur de l'enceinte d'additif. On cumule l'avantage d'une filtration centripète qui maximise la surface de média filtrant du côté de la zone amont, de l'absence d'impureté en contact avec la paroi déformable du réservoir d'additif (le risque de rigidifier cette paroi par accumulation d'impuretés étant évité). Et lorsqu'on diffuse l'additif par utilisation de l'effet venturi, il est permis que la différence de pression au niveau du venturi soit constante au cours du temps (suivant le débit de gazole entrant dans le filtre), ce qui n'est pas le cas si le carburant à l'intérieur de l'enceinte d'additif n'était pas filtré en raison de la perte de charge de l'élément filtrant qui augmenterait avec le temps (chargement de l'élément filtrant). On préfère ici éviter cette dérive et ne pas dépendre d'éventuelles fluctuations des différences de pression entre l'intérieur et l'extérieur du réservoir d'additif (différences de pression non constantes en fonction du débit de carburant).

Dans des modes de réalisation préférés de l'invention, on peut éventuellement avoir recours en outre à l'une et/ou à l'autre des dispositions suivante :

- le filtre comporte un fourreau ayant une extrémité libre pouvant se raccorder au réservoir d'additif, ce fourreau comportant un compartiment pour loger le composant actionneur, et un conduit séparé du compartiment et débouchant axialement par deux ouvertures opposées, l'une des deux ouvertures opposées faisant communiquer le conduit de communication avec le canal de carburant.
- le dispositif de libération d'additif comporte un tube de transport d'additif qui définit une partie du canal de distribution, le tube de transport étant inséré dans un passage d'additif du composant actionneur, au moins un joint annulaire étant monté sur le tube de transport pour réaliser une étanchéité entre le compartiment et le canal de carburant.
- au moins un joint annulaire est monté sur le composant actionneur pour réaliser une étanchéité entre le compartiment et le canal de distribution.
- l'élément filtrant délimite une zone d'amont communiquant avec l'entrée de carburant brut et une zone d'aval communiquant avec la sortie de carburant filtré ;
- la zone d'aval comprend dans l'espace intérieur une première sous-zone interne au fourreau qui est délimitée par ledit conduit et une deuxième sous-zone externe au fourreau qui s'étend de façon annulaire entre la face interne du média filtrant et une face externe du fourreau.
- l'entrée de carburant brut et la sortie de carburant filtré sont agencées à distance du fond, le canal de distribution définissant un orifice de distribution de l'additif liquide qui débouche dans le canal de carburant, l'orifice de distribution d'additif étant distinct des orifices d'entrée et de sortie de carburant.
- le canal de carburant du couvercle comprend un venturi pour générer une différence de pression entre l'orifice d'entrée ou de sortie de carburant et l'orifice de distribution d'additif.
- le canal de carburant communique avec l'espace intérieur par l'intermédiaire d'au moins un conduit traversant la première extrémité axiale de l'élément filtrant, le canal de carburant étant délimité par une pièce moulée en plastique qui comporte :

  - une face supérieure, optionnellement recouverte par une paroi externe du couvercle qui présente l'un au moins parmi l'orifice d'entrée et l'orifice de sortie ; et
  - une face inférieure depuis laquelle fait saillie une tubulure selon une direction parallèle à un axe longitudinal de l'élément filtrant, la tubulure définissant avec la deuxième extrémité axiale de l'élément filtrant une zone annulaire d'étanchéité couvercle-élément filtrant.

- le canal de carburant communique avec la sortie de carburant filtré et comprend :

- un passage d'entrée qui communique avec l'espace intérieur et débouche à proximité de la première extrémité axiale de l'élément filtrant ; et
- un passage latéral, situé entre le passage d'entrée et la sortie de carburant filtré.

- le réservoir d'additif fait partie d'une enceinte d'additif et délimite avec une enveloppe externe de cette enceinte un volume périphérique qui communique de façon étanche avec le passage latéral.
- le réservoir d'additif liquide présente au moins une paroi mobile et étanche entre un volume interne du réservoir d'additif et le volume périphérique délimité par l'enveloppe externe, la paroi mobile assurant d'une part une séparation étanche et contribuant d'autre part à maintenir une pression identique entre l'additif dans le réservoir d'additif et du carburant dans le volume périphérique.
- le conduit de communication communique avec le canal de carburant du couvercle et s'étend dans l'espace intérieur, parallèlement au canal de distribution, jusqu'à proximité de la deuxième extrémité axiale de l'élément filtrant pour communiquer avec le volume périphérique (ce grâce à quoi un conduit d'équilibrage de pression est obtenu sans augmenter l'encombrement externe du filtre).
- le venturi permet de générer une différence de pression entre le conduit de la première sous-zone et l'orifice de distribution, c'est-à-dire entre la pression du volume périphérique et celle du volume interne au réservoir d'additif.
- le conduit d'équilibrage de pression débouche par le passage latéral dans le canal de carburant et est séparé de façon étanche de la deuxième sous-zone par un contact annulaire étanche entre le fourreau et une surface d'étanchéité (de préférence une lèvre annulaire) formée sur l'enveloppe externe, ce grâce à quoi la pression dans le volume périphérique correspond à la pression au niveau du passage latéral.
- le boîtier comporte le couvercle et un bol (comprenant le fond) permettant de loger le réservoir d'additif, sachant que le couvercle comporte une partie d'obturation recouvrant le bol et une partie d'insertion qui s'étend dans l'espace intérieur), la partie d'obturation incluant l'orifice d'entrée et l'orifice de sortie.
- la partie d'insertion comprend le canal de distribution, le composant actionneur et un embout de connexion (formé à l'opposé de la partie d'obturation) pour se raccorder de manière étanche au réservoir d'additif.
- le dispositif de libération d'additif est destiné à être monté avec le couvercle, par exemple de manière permanente, sur le circuit de circulation de carburant.
- la partie d'insertion a une forme générale tubulaire, délimitée par exemple par le fourreau, l'élément filtrant étant monté de façon amovible autour de la partie d'insertion.
- l'élément filtrant comporte un flasque à chacune des première et deuxième extrémités axiales.
- un élément d'armature, de préférence tubulaire, est prévu pour protéger la face interne du média filtrant.
- le composant actionneur comprend un élément obturant qui est déplacé en fonction d'une commande électrique reçue par le dispositif de libération d'additif.
- un dispositif de chauffage permet de chauffer l'additif en amont de l'orifice de distribution, de préférence entre l'embout de connexion et une entrée du canal de distribution.

BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :

- la figure 1 est une vue en coupe d'un filtre à carburant avec une cartouche filtrante selon l'invention ;
- la figure 2 est une perspective éclatée du filtre de la figure 1 ;
- la figure 3 est une vue en coupe longitudinale d'une cartouche filtrante avec enceinte d'additif, utilisable dans le filtre de la figure 1 ;
- la figure 4 est une perspective éclatée illustrant la cartouche de la figure 3 ;
- la figure 5 illustre un détail d'une variante de cartouche filtrante, utilisable dans le filtre de la figure 1 ;
- la figure 6 illustre en détail le mode de fixation de l'enceinte d'additif, et également une variante de cartouche ;
- la figure 7 représente schématiquement une disposition possible du filtre avec fonction de distribution d'additif selon l'invention, dans un circuit de circulation de carburant pour moteur à combustion interne ;
- la figure 8 montre une vue schématique en coupe transversale de la cartouche filtrante, à l'interface entre l'extrémité de fixation et le flasque proximal ;
- la figure 9 est une vue en perspective éclatée d'un exemple d'assemblage d'un dispositif de libération d'additif avec électrovanne ;
- la figure 10 est une vue en coupe longitudinale du dispositif de libération d'additif de la figure 9 ;
- les figures 11A et 11B montrent des parties de boîtier utilisables dans un mode de réalisation de l'invention.

DESCRIPTION DES MODES DE REALISATION PREFERES DE L'INVENTION

Sur les différentes figures, des références identiques indiquent des éléments identiques ou similaires.

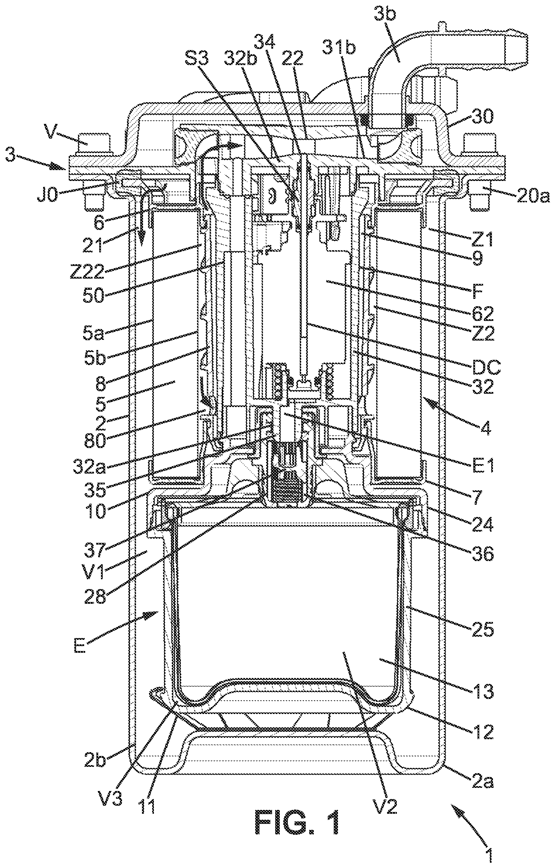

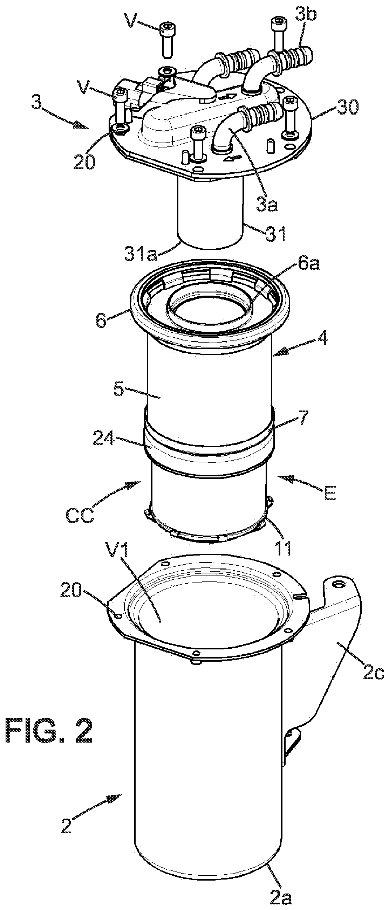

Les figures 1 et 2 représentent une forme de réalisation du filtre à carburant (gazole ou carburant similaire) qui embarque une enceinte d'additif E. Ce filtre 1 comprend un boîtier (2, 3) qui présente une paroi supérieure et une paroi inférieure. Dans l'exemple non limitatif des figures, la paroi inférieure du boîtier (2, 3) est formée par un bol 2 en métal ou en plastique. Le bol 2 présente un fond 2a à partir duquel s'étend vers le haut une paroi latérale 2b, ici sensiblement cylindrique et présentant un rebord supérieur directement solidaire d'un couvercle 3 formant la paroi supérieure du boîtier (2, 3). Ce couvercle 3 présente un bord qui est directement fixé sur le bord annulaire (ici circulaire) du bol 2. Plus généralement, on comprend que le couvercle 3 est relié de manière étanche au bol 2. Dans la configuration particulière et non limitative de la figure 1, il n'y a pas d'étanchéité directe entre le bol 2 et le couvercle 3 mais une étanchéité est tout de même obtenue par le joint J0 qui est sur le flasque 6. Ainsi, on peut s'assurer que le joint J0 sera changé lors de la rechange car il est ici lié à l'élément filtrant 4. Dans d'autres configurations, un joint peut être directement monté entre le bol 2 et le couvercle 3 sans faire intervenir une tierce pièce.

Le bord du couvercle 3 peut être par exemple vissé sur le bord du bol 2 à l'aide de plusieurs vis V traversant des trous 20 et engagées dans des écrous 20a, ou par l'intermédiaire d'un filetage périphérique, de façon connue en soi.

Comme illustré sur la figure 2, ce couvercle 3 présente un orifice d'entrée 3a de carburant à filtrer ainsi qu'un orifice de sortie 3b de carburant filtré pour permettre la circulation et la filtration du carburant à l'intérieur du filtre 1. Le boîtier (2, 3) est raccordable de façon interchangeable à des conduites d'un système d'alimentation en carburant d'un véhicule à moteur à combustion. Dans cet exemple, le couvercle 3 forme une tête de filtre à section en "T" et comprend :

- une partie d'obturation 30 qui s'étend transversalement au-dessus du bol 2 et qui peut incorporer l'orifice d'entrée 3a de carburant brut et l'orifice de sortie 3b de carburant filtré ; et
- une partie d'insertion 31 qui s'étend longitudinalement entre une extrémité inférieure 31a et une extrémité supérieure 31b de raccordement à la partie d'obturation 30.

Le boîtier formé par le bol 2 et le couvercle 3 délimite un volume intérieur V1 dans lequel est disposé un module d'additif, ici sous la forme d'une enceinte d'additif E, ainsi qu'un élément filtrant 4 de forme annulaire qui s'étend suivant un axe longitudinal A. Cet axe longitudinal A est de préférence un axe central de révolution de l'élément filtrant 4 et éventuellement correspond aussi à un axe central de l'enceinte d'additif E. L'élément filtrant 4 présente ici un média filtrant 5, un premier flasque distant de l'enceinte d'additif E et appelé dans ce qui suit flasque distal 6, un deuxième flasque proche de l'enceinte d'additif E et appelé dans ce qui suit flasque proximal 7. Le média filtrant 5 s'étend de préférence autour de l'axe longitudinal A qui peut éventuellement coïncider avec l'axe de révolution du bol 2 lorsque la paroi 2b est par exemple cylindrique. L'élément filtrant 4 peut comporter optionnellement un élément d'armature 8 ou une structure interne de liaison entre les deux flasques 6, 7. L'élément d'armature 8 a ici une forme sensiblement tubulaire qui rigidifie l'élément filtrant 4 et qui peut permettre de canaliser du carburant. L'élément d'armature 8 s'étend ici entre le flasque distal 6 (flasque supérieur sur la figure 1) et le flasque proximal 7 (flasque inférieur sur la figure 1).

Bien entendu, d'autres formes de réalisation de l'élément filtrant 4 peuvent être utilisées, par exemple avec seulement le flasque proximal 7 ou sans aucun flasque axial, l'élément d'armature 8 pouvant dans ce cas être maintenu en position par un contact avec la face interne 5b du média filtrant 5. Il est également possible d'avoir une configuration sans élément d'armature 8.

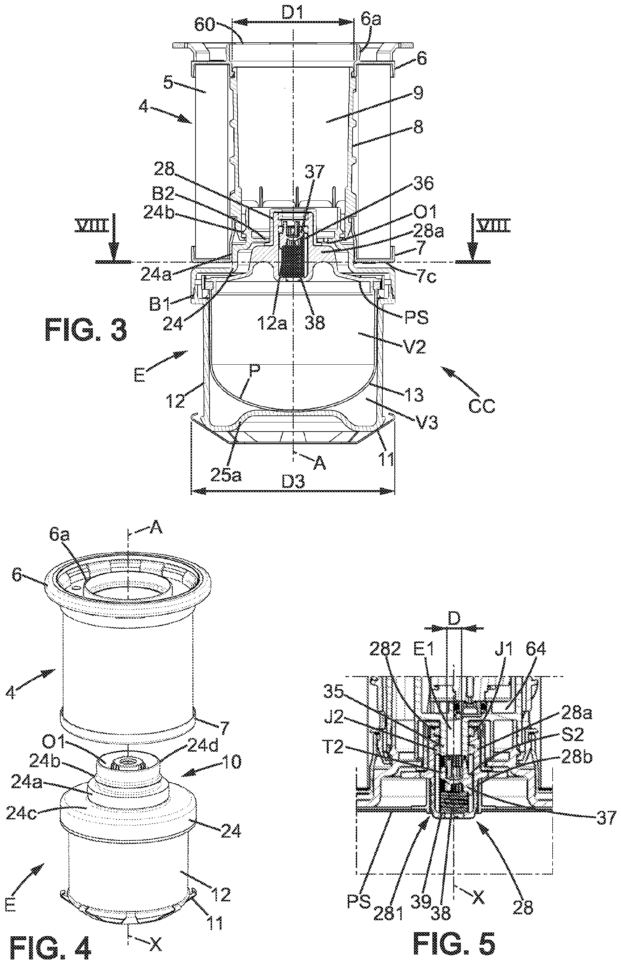

Dans l'exemple non limitatif illustré, l'élément filtrant 4 et l'enceinte d'additif E ou module d'additif analogue sont agencés de façon superposée et sont fixés l'un à l'autre pour définir une cartouche combinée filtrante CC bien visible sur les figures 2 et 3. Cette cartouche CC s'étend par exemple longitudinalement depuis le fond de l'enceinte d'additif E, optionnellement pourvu d'un ressort 11, jusqu'au flasque distal 6, optionnellement pourvu d'un joint (faisant l'étanchéité entre le couvercle 3 et le bol 2), qui forme une extrémité de cartouche, comme illustré sur la figure 2. Dans la cartouche combinée filtrante CC, un espace intérieur 9 est délimité par la face interne 5b du média filtrant 5. L'enceinte d'additif E présente une extrémité de fixation 10 qui peut s'insérer en partie dans l'espace intérieur 9 et permet d'accrocher l'enceinte d'additif E au flasque proximal 7 et/ou à l'élément d'armature 8 de l'élément filtrant 4. L'extrémité de fixation 10 peut en outre être en contact étanche, par exemple avec un contact annulaire radial, contre une portion tubulaire du flasque proximal 7. Dans une option rendant le module d'additif inséparable de l'élément filtrant 4, on peut rendre le flasque proximal 7 solidaire ou intégré dans l'extrémité de fixation 10.

Alternativement, l'extrémité de fixation 10 peut s'étendre en dessous de l'espace intérieur 9 et se raccorder de manière étanche à la portion radiale 7c (recouvrant l'extrémité axiale 5c inférieure du média filtrant 5) du flasque proximal 7.

Bien que la description qui suit se réfère à un réservoir d'additif 13 faisant partie d'une enceinte d'additif E du type comprenant une enveloppe externe 12 fermée du côté opposé à l'extrémité de fixation 10, il doit être compris qu'on peut utiliser d'autres configurations du réservoir 13 dans un module d'additif. Par exemple, une paroi P du réservoir 13 peut être en contact direct avec du carburant situé à proximité du fond 2a du boîtier (2, 3) et l'enveloppe externe 12 peut être remplacée par une structure rigide ajourée ou pourvue d'orifices de passage de façon à mettre le réservoir 13 sous une pression de carburant.

La cartouche combinée filtrante CC correspond à une unité pouvant être insérée d'un seul tenant à l'intérieur du boîtier (2, 3). La cartouche CC comprend une extrémité adaptée pour buter contre le fond 2a du bol 2 et présentant optionnellement un ressort 11 raccordé à l'enveloppe externe 12 de l'enceinte d'additif E, ou solidaire du fond 2a. La cartouche CC est montée de manière amovible sur le couvercle 3. Un raccordement étanche peut être prévu entre une portion saillante du flasque distal 6 ou un joint associé et une surface annulaire d'étanchéité formé du côté de la face intérieure de la partie d'obturation 30. Alternativement le raccordement étanche peut être réalisé par le contact d'une lèvre d'étanchéité de l'élément filtrant 4 contre une surface annulaire périphérique de la partie d'insertion 31. Plus généralement, un contact étanche annulaire est obtenu de façon à ce que le couvercle 3 et l'élément filtrant 4 délimitent (dans la configuration montée de la cartouche CC) une zone Z1 en amont de la filtration qui communique avec l'orifice d'entrée 3a et une zone Z2 en aval de la filtration qui communique avec l'orifice de sortie 3b.

Du fait du caractère amovible de la cartouche CC, le bol 2 et le couvercle 3 constituent des parties réutilisables. L'une ou l'autre de ces parties peut être raccordée au véhicule par une interface de fixation. Dans l'exemple non limitatif de la figure 2, on peut voir que le bol 2 comprend au moins une extension latérale 2C qui permet une telle fixation. Pour des raisons d'ergonomie, la partie d'obturation 30 du couvercle 3 peut être relativement aplatie et dépourvue d'organe actionneur pour commander la diffusion d'additif. De plus, on peut loger au moins une partie du réservoir d'additif 13 dans l'espace intérieur 9.

Comme illustré à la figure 1, le couvercle 3 intègre un dispositif 32 de libération d'additif. Ce dispositif 32 de libération de l'additif liquide appartient à la partie d'insertion 31 et s'étend de façon parallèle à l'axe longitudinal A entre :

- une première extrémité axiale 32a incluant une entrée d'additif E1 qui communique avec l'intérieur du réservoir d'additif 13 de l'enceinte d'additif E ; et
- une deuxième extrémité axiale 32b pourvue d'un orifice de distribution 34 de l'additif liquide qui débouche dans la sortie 3b de carburant.

On comprend que le dispositif de libération d'additif 32, qui comporte l'orifice de distribution 34 pour diffuser l'additif dans un circuit C1 de circulation de carburant, inclut un canal de distribution DC permettant de faire circuler l'additif liquide de l'entrée d'additif E1 vers l'orifice de distribution 34. L'entrée d'additif E1 peut être définie par un embout de connexion 35 qui forme une partie de la première extrémité axiale 32a. L'embout de connexion 35 est par exemple de type mâle et a une forme tubulaire comme illustré sur la figure 5.

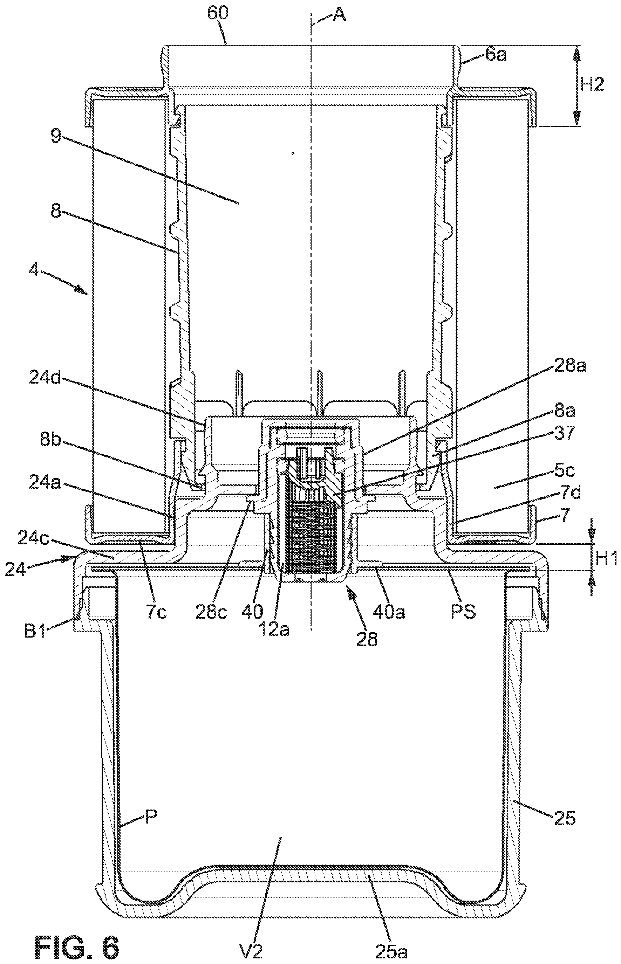

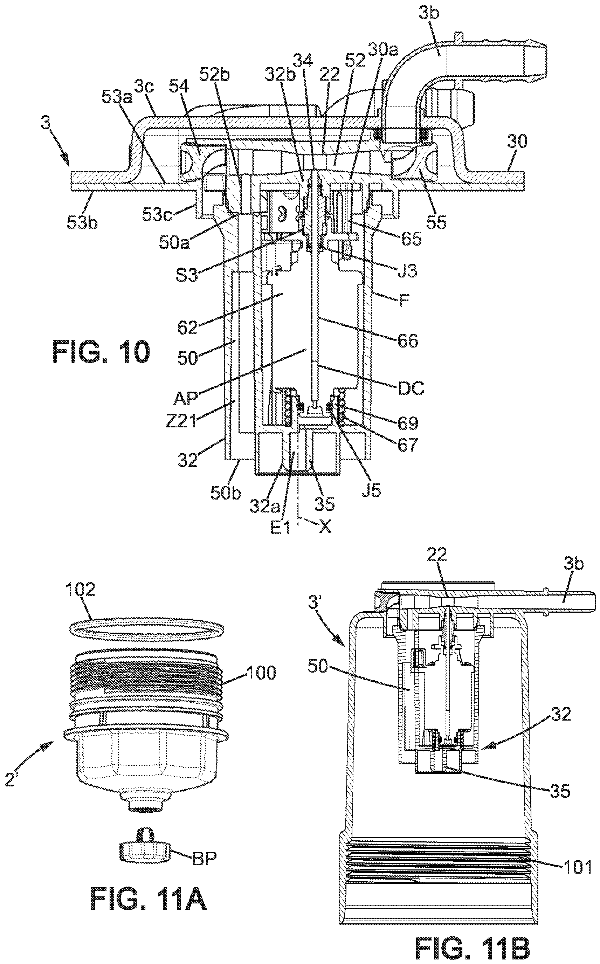

Dans le mode de réalisation des figures 11A et 11B, la cartouche CC peut se démonter par le bas, le dispositif de libération d'additif 32 restant fixe par rapport au véhicule automobile lors de la rechange. Dans cet exemple, le bol 2 est remplacé par un élément amovible 2' qui peut présenter un bouchon de purge BP. Le filetage 100 de cet élément amovible 2' coopère avec le filetage 101 de l'élément d'enveloppe 3' et un joint annulaire 102 garantit l'étanchéité de la fixation du boîtier de filtre. On comprend que dans ce type de boîtier de filtre, la cartouche CC montrée sur les figures 3-4 ou celle montrée sur la figure 6 peut être montée de façon identique et fonctionner comme avec le boîtier montré sur les figures 1-2.

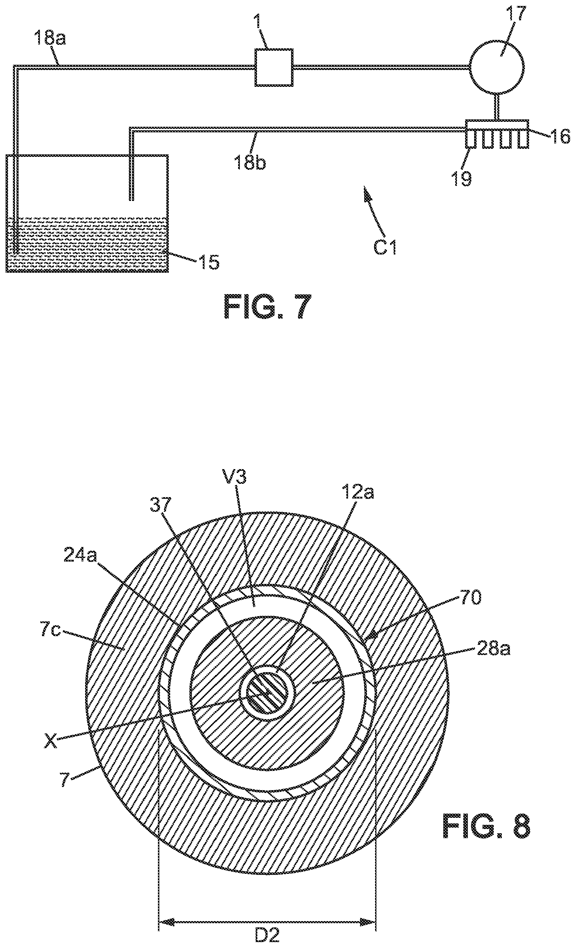

En référence à la figure 7, un exemple d'intégration du filtre 1 va à présent être brièvement décrit.

La figure 7 représente schématiquement un circuit C1 de circulation de carburant pour moteur à combustion interne avec un filtre à carburant 1. Classiquement, le circuit C1 de circulation de carburant est disposé entre un réservoir 15 de carburant et la rampe haute pression 16 (également appelée « common rail ») et assure la circulation du carburant entre l'intérieur du réservoir 15 et la rampe haute pression 16. Le circuit d'alimentation comporte ici le filtre 1 qui est destiné à filtrer le carburant et une pompe haute pression 17. La pompe haute pression 17 et la rampe haute pression 16 constituent le système d'injection du carburant. Un premier conduit 18a, dit « ligne d'alimentation », assure la circulation de carburant depuis l'intérieur du réservoir 15 vers la rampe haute pression 16 et un second conduit 18b, dit « ligne retour » assure la circulation de carburant depuis le système d'injection jusqu'à l'intérieur du réservoir 15. Le carburant est donc pompé dans le réservoir 15, puis filtré dans le filtre 1 et envoyé sous pression, par l'intermédiaire de la pompe 17, dans la rampe haute pression 16 puis une partie est dirigée vers les injecteurs 19 du moteur et une autre partie retournée jusqu'à l'intérieur du réservoir 15 par la ligne retour 18b. Une partie du carburant peut également être envoyé de la pompe haute pression 17 vers la ligne retour 18b.

Du fait de la configuration de la cartouche CC dans le filtre 1 avec raccordement de l'enceinte d'additif E au dispositif de libération d'additif 32, le circuit C1 de circulation de carburant fait également circuler l'additif liquide en direction de la rampe haute pression 19. Dans un mode de réalisation préféré, le filtre 1 présente un orifice de distribution 34 débouchant sur la ligne d'alimentation 18a, comme indiqué sur la figure 7. Cependant, on peut aussi prévoir que l'orifice de distribution 34 débouche dans une conduite différente, par exemple pour diffuser de l'additif liquide dans la ligne retour 18b.

Un exemple de circulation du carburant dans le filtre 1 va à présent être décrit en référence aux figures 1 et 2.

Le carburant brut qui provient typiquement du réservoir à carburant 15 est introduit dans le boîtier (2, 3) par l'orifice d'entrée 3a et est acheminé dans le volume intérieur V1 dans un espace annulaire 21 de la zone d'amont Z1 formé autour de la cartouche CC et qui est délimité notamment par la face externe 5a du média filtrant 5. Le carburant à filtrer, par exemple du gazole, peut passer à travers le média filtrant 5 qui retient les impuretés notamment solides et éventuellement l'eau (par exemple si une toile hydrophobe est ajoutée ou si l'élément d'armature 8 comprend un tube de séparation d'eau avec toile hydrophobe surmoulée). Le média filtrant 5 peut être d'un genre connu en soi et ne sera pas davantage décrit ici.

Après la traversée du média filtrant 5, le carburant filtré peut circuler dans l'espace intérieur 9 le long de la face interne 5a, par exemple de façon descendante en étant canalisé par des reliefs en hélice de l'élément d'armature 8. Après avoir traversé l'élément d'armature 8 via des ouvertures (ici des ouvertures inférieures 80), le carburant filtré peut circuler (ici de façon ascendante) autour et le long de la partie d'insertion 31 pour rejoindre l'orifice de sortie 3b. Dans l'exemple de réalisation de la figure 1, on voit qu'un venturi 22 est situé entre les orifices d'entrée et de sortie 3a-3b du carburant, de façon à réaliser une dépression locale en amont de l'orifice de sortie 3b. Le carburant filtré peut passer dans le venturi 22 qui est conçu selon une direction qui est transversale, et de préférence perpendiculaire à l'axe longitudinal A. Lorsque le carburant filtré arrive à la sortie 3b, il peut avantageusement contenir l'additif diffusé au niveau du venturi 22.

Le venturi 22 est agencé dans la partie d'obturation 30 du couvercle, ici dans un canal de carburant 52 adjacent au flasque 6 à l'état monté de l'élément filtrant 4, et l'orifice de distribution 34 débouche dans la zone de rétrécissement du venturi 22. Ainsi le venturi forme un moyen de génération d'une différence de pression entre l'un des orifices d'entrée 3a ou de sortie 3b de carburant et l'orifice de distribution 34. Dans l'exemple illustré, l'orifice de distribution 34 est proche de l'orifice de sortie 3b, de sorte que l'additif liquide se mélange dans le carburant filtré et dans une partie de la zone d'aval Z2 situé complètement en dehors du bol 2.

En référence aux figures 1 et 10, on peut distinguer pour la zone d'aval Z2, dans l'espace intérieur 9, une première sous-zone Z21 interne au fourreau F qui est délimitée par le conduit de communication 50 et une deuxième sous-zone Z22 externe au fourreau F qui s'étend de façon annulaire entre la face interne 5b du média filtrant 5 et une face externe du fourreau F. Le flux de circulation de carburant filtré se fait en pratique essentiellement dans une deuxième sous-zone Z22 (lorsque la première sous-zone Z21 est déjà remplie de carburant).

Des exemples de configuration de l'enceinte d'additif E avec connexion à l'élément filtrant 4 et à la partie d'insertion 31 du couvercle 3 vont à présent être décrit en référence aux figures 1 à 6.

L'enceinte d'additif E présente ici une enveloppe externe 12 qui peut être obtenue par liaison étanche d'une pièce annulaire 24 sur une cuve 25 distincte du bol 2. La cuve 25 et la pièce annulaire 24 peuvent être rigides. Cette configuration avec une enveloppe externe 12 permet d'une part de protéger l'intégrité et l'étanchéité du réservoir 13 qui est au moins en partie souple, et d'autre part de faciliter la connexion et l'assemblage avec l'élément filtrant 4, par exemple par utilisation de surfaces de guidage et/ou d'accrochage 24a formées sur la pièce annulaire 24. Ceci permet également de s'assurer que le carburant autour du réservoir d'additif 13 est propre.

Cette enveloppe externe 12 comporte un conduit de sortie d'additif liquide 12a, de préférence unique, qui est défini par un raccord externe 28. L'enveloppe externe comporte aussi au moins un orifice O1 de passage de carburant de façon à faire pénétrer du carburant à l'intérieur de l'enceinte d'additif E, autour du réservoir 13. Comme visible sur les figures 1 et 3, le réservoir 13 peut être composé d'une paroi P étanche flexible, ici en forme de bol, et d'une paroi supérieure PS, de préférence rigide dans sa partie centrale. Le réservoir 13 s'étend à l'intérieur de l'enveloppe externe 12 et une paroi P est mobile et étanche entre le volume interne V2 du réservoir 13 et un volume périphérique V3 délimité par l'enveloppe externe 12. On comprend que cette paroi P assure d'une part une séparation étanche et d'autre part maintient une pression identique entre l'additif dans le réservoir 13 et le carburant dans l'enceinte d'additif E.

Dans l'exemple de la figure 3, la paroi supérieure PS comprend le raccord externe 28 et s'étend transversalement par rapport à l'axe longitudinal A. Le bord externe de la paroi supérieure PS est de préférence non déformable et fixe par rapport à l'enveloppe externe 12 et permet de maintenir une forme annulaire de large diamètre pour la partie supérieure de la paroi P. Le réservoir 13 est ainsi déformable et assimilable à une poche souple et peut se vider par poussée ascendante sur la paroi P sans création de volume mort. La matière de la paroi P peut être de type membrane déformable éventuellement en élastomère (un élastomère fluoré par exemple) à titre d'exemple non limitatif. Le mode de fixation de la membrane est d'un type connue en soi, par exemple en coinçant de façon étanche le bord de membrane. Le fond 25a rigide de la cuve 25 peut être optionnellement en contact avec le fond souple du réservoir 13 à l'état rempli de ce dernier, comme cela est visible sur la figure 3. Dans l'exemple de la figure 6, il faut noter que la membrane formant la paroi P est formée par un plastique souple non élastomère. La paroi P peut alors être composée d'un film plastique (film dont l'épaisseur peut être inférieure à 900 $\mu$m).

De préférence, le raccord externe 28 s'étend de façon globalement tubulaire pour délimiter le conduit de sortie 12a et comporte des moyens d'obturation 36 pour fermer automatiquement de manière étanche le conduit de sortie 12a dans un état désengagé du raccord externe 28, c'est-à-dire lorsque celui-ci n'est pas connecté à l'embout de connexion 35 formé sur l'extrémité axiale 32a du dispositif de libération d'additif 32. L'embout de connexion 35 coopère, ici en s'engageant dans le conduit de sortie 12a, avec les moyens d'obturation 36 de manière à ce que le canal de distribution DC communique avec l'intérieur du réservoir d'additif 13 dans un état engagé de l'embout de connexion 35 avec le raccord externe 28. Optionnellement, le raccord externe 28 peut être légèrement flottant sur la pièce annulaire 24 (i.e. avec une possibilité de faible mouvement axial, typiquement sur une distance inférieure ou égale à 5 mm) pour favoriser le montage et limiter l'usure des composants internes au raccord externe 28, sachant qu'une telle usure peut parfois créer des fuites de l'additif.

En référence aux figures 3 et 5, le raccord externe 28 de type auto-obturant comprend un corps ou une portion tubulaire 28a avec deux ouvertures opposées, définissant un axe de passage X qui peut être parallèle et éventuellement confondu avec l'axe longitudinal A. Dans la position d'engagement de l'embout de connexion 35 dans le raccord externe 28, l'élément filtrant 4 et l'enceinte d'additif E sont dans une configuration superposée et les moyens d'obturation 36 sont agencés pour permettre la communication d'additif liquide à travers le conduit de sortie 12a. L'embout de connexion 35 s'étend alors à distance de la première extrémité 281 du raccord externe 28, c'est-à-dire à distance du débouché du conduit de sortie 12a dans le volume interne V2 du réservoir d'additif 13, et vient en prise avec les moyens d'obturation 36. Du côté de la deuxième extrémité 282 du raccord externe 28 (extrémité 282 formant organe femelle et correspondant ici au débouché du conduit de sortie d'additif 12a dans l'espace intérieur 9), au moins un contact radial étanche est réalisé entre la face externe latérale de l'embout de connexion 35 et un ou plusieurs joints annulaires J1, J2 montés intérieurement dans le corps tubulaire 28a.

Dans l'exemple des figures 5 et 6, le corps tubulaire 28a du raccord externe 28 traverse ici la paroi supérieure PS et présente sur sa face latérale des projections externes annulaires formant des collerettes circonférentielles 28b de section triangulaire, à la manière d'un sapin. Le corps tubulaire 28a est partiellement introduit dans un embout 40 en matière plastique formant partie du réservoir 13. Cet embout 40, qui est typiquement soudé sur la paroi supérieure PS, est axialement saillant vers l'extérieur par rapport à la paroi supérieure PS du réservoir 13 destiné à l'additif liquide. Cet embout 40 délimite une section de passage préférentiellement constante pour coopérer avec l'extrémité 281, ici en forme de sapin. Les collerettes circonférentielles 28b permettent de déformer le matériau souple constitutif de l'embout 40, formant autant d'étanchéités qu'il y a de collerettes 28b consécutives en contact avec l'embout 40. Une zone de soudure 40a est définie entre la paroi supérieure PS et la face inférieure d'un rebord de l'embout 40. Cette zone de soudure 40a s'étend perpendiculairement à l'axe A.

Dans une variante avec le même genre d'embout 40, l'extrémité 281 peut présenter une gorge annulaire externe dans laquelle est reçu un joint torique. Dans ce cas un blocage de l'extrémité 281 peut être réalisé par l'engagement d'organes de retenue répartis sur la face intérieure de l'embout 40 et sur l'extrémité 281. Il s'agit par exemple d'encoche(s) complémentaire(s) d'élément(s) radialement saillant(s) formés dans la partie inférieure de l'embout 40.

A l'intérieur du corps tubulaire 28a, le long de l'axe X, un clapet 37 qui est monté coulissant permet d'obturer le conduit de sortie 12a. Le clapet 37, qui fait partie des moyens d'obturation 36, est sollicité vers une position de fermeture par un organe de rappel élastique 38 tel qu'un ressort. La fermeture étanche est obtenue par exemple du fait que le joint annulaire J2 forme une butée pour une surface axiale S2 situé en périphérie du clapet 37. Une portion tubulaire T2 du clapet 37 peut alors venir en contact radial contre le joint J2 lorsque l'organe de rappel élastique 38 n'est plus soumis à une force de contrainte (cette force de contrainte s'exerçant ou non en fonction du positionnement de la cartouche CC dans le filtre 1). Cet organe de rappel élastique est par exemple formé par un ressort en appui sur un siège 39 formé dans la première extrémité 281. Lorsque l'embout de connexion 35 est retiré, on comprend que le clapet 37 est déplacé, ici par poussée d'un ressort, jusqu'à venir en contact avec ce type de butée pour occuper une position de fermeture dans laquelle il obture totalement le conduit de sortie 12a pour l'additif liquide.

Dans l'exemple non limitatif des figures 3 et 5, l'état d'ouverture des moyens d'obturation 36 s'obtient par une poussée du clapet 37 exercée par l'embout de connexion 35 qui est ici creux pour faire communiquer le réservoir d'additif 13 avec l'espace intérieur 9. L'insertion de l'embout de connexion 35 correspond à l'état monté de la cartouche CC, de préférence dans une configuration de fixation entre le bol 2 et le couvercle 3 comme illustré à la figure 1. Bien entendu, les moyens d'obturation 36 peuvent se présenter sous d'autres formes alternatives. Ainsi, le clapet 37 des moyens d'obturation 36 n'est pas forcément en contact étanche radial avec le corps tubulaire 28a et peut se présenter sous la forme d'une bille ou d'un piston venant obturer un orifice de passage avec une étanchéité axiale. Lorsque l'on utilise au moins deux joints J1, J2 dans le raccord externe 28, on peut prévoir que ces joints J1, J2 sont chacun efficace dans une plage donnée de température qui peut être différente. A titre d'exemple nullement limitatif, l'étanchéité peut être améliorée en répartissant deux joints J1, J2 sur une distance axiale optionnellement au moins égale au diamètre interne D de l'entrée E1 définie par l'embout de connexion 35.

Dans l'exemple de la figure 3, la conception de la paroi supérieure PS est différente, de sorte qu'elle inclut le corps tubulaire 28a du raccord externe 28 (il s'agit d'une seule pièce de moulage). Avec cette configuration, la chaine de cotes de positionnement de l'embout de connexion 35 par rapport à l'enceinte d'additif E est plus courte. Ainsi, on n'additionne pas les tolérances d'exécution de pièces intermédiaires pour assurer la précision de positionnement de la première extrémité axiale 32a du dispositif de libération d'additif 32.

Le flasque distal 6 présente une ouverture centrale 60 ayant un premier diamètre interne D1 qui peut être inférieure ou sensiblement égal au diamètre maximal D3 de l'enceinte d'additif E (ici au moins aussi large que le flasque distal 6 dans l'exemple des figures 1-6) mais supérieur au diamètre (ou diamètre équivalent) de la partie insérable 31 pour permettre l'engagement de cette dernière dans l'espace intérieur 9 lors de l'étape de connexion du dispositif de libération d'additif 32. Pour permettre l'assemblage de la cartouche filtrante CC, on comprend que le flasque proximal 7 présente une ouverture centrale 70 ayant un deuxième diamètre interne D2 de dimensions similaires au premier diamètre interne D1. Afin d'optimiser le remplissage du boîtier (2, 3) et réduire l'encombrement global du filtre 1, la relation suivante peut alors être satisfaite pour ces diamètres :

$$0,5 \leq D1/D3 \leq 1 \quad \text{et} \quad 0,5 \leq D2/D3 \leq 1$$

Comme illustré sur la figure 4, il est en pratique avantageux que l'extrémité de fixation 10 de l'enceinte d'additif E présente une symétrie de révolution, afin de faciliter l'assemblage avec l'élément filtrant 4. Dans ce cas, l'axe de passage X défini par le corps tubulaire 28a est confondu avec l'axe longitudinal A de l'élément filtrant 4. La figure 8 illustre également, dans le plan de la portion radiale 7c du flasque proximal 7, la symétrie de révolution de l'extrémité de fixation 10. Cependant, on comprend que l'axe de passage X peut être décalé latéralement par rapport à l'axe central de la pièce annulaire 24, l'embout de connexion 35 étant alors décalé de façon correspondante par rapport à l'axe longitudinal A lorsque la cartouche filtrante CC est engagée avec la partie d'insertion 31 du couvercle 3. La position angulaire correcte peut être obtenue facilement dans ce cas par utilisation de moyens de guidage et/ou par un indicateur de positionnement (marquage) placés sur le flasque distal 6.

En référence aux figures 3-4 et 8, la pièce annulaire 24 de l'enveloppe externe 12 comprend l'extrémité de fixation 10 et une portion radiale 24c qui s'étend parallèlement à la portion radiale 7c du flasque proximal 7. L'extrémité de fixation 10 s'étend au travers de l'ouverture 70 définie par la portion radiale 7c (cette portion 7c ayant une forme annulaire). Le raccord externe 28 peut traverser également cette ouverture 70. Dans cet exemple non limitatif l'extrémité de fixation 10 est en saillie axiale par rapport à la portion radiale 24c et entoure le corps tubulaire 28a du raccord externe 28 (ce dernier s'étendant ainsi à distance radiale de face interne 5b du média filtrant 5, du flasque proximal 7 et de l'éventuel élément d'armature 8).

Comme cela est visible sur la figure 3, l'extrémité de fixation 10 s'étend le long du flasque proximal 7 et permet d'accrocher l'enceinte d'additif E à l'élément filtrant 4. L'extrémité de fixation 10 comporte une lèvre d'étanchéité 24d ou un bourrelet à proximité d'un bord libre. Cette lèvre d'étanchéité 24d est destinée former une zone annulaire de contact étanche, de préférence un contact radial, avec une surface interne annulaire correspondante de l'extrémité inférieure 31a qui s'insère dans l'espace intérieur 9 jusqu'à proximité du flasque proximal 7. Alternativement, le bourrelet ou lèvre analogue d'étanchéité peut être formé à l'extrémité de la partie d'insertion 31 pour coopérer avec une surface annulaire de l'extrémité de fixation 10.

L'extrémité de fixation 10 comporte en outre une portion de surface annulaire de guidage et d'étanchéité 24a (ici une portée cylindrique) qui s'étend de façon annulaire depuis une zone de jonction avec la portion radiale 24c de la pièce annulaire 24. Le flasque proximal 7 comporte, sur une portion d'extension axiale reliée au bord interne de la portion radiale 7c, une surface annulaire 7d continue qui est en contact annulaire étanche avec la portion de surface 24a dans la cartouche CC.

De façon similaire, le flasque distal 6 comporte une lèvre d'étanchéité 6a qui est en contact étanche avec une surface continue correspondante de la portion d'obturation 30. Grâce à ces deux zones d'étanchéité au niveau des flasques 6 et 7, l'élément filtrant 4 est interposé de manière étanche entre l'espace annulaire 21 de la zone d'amont Z1 et l'espace intérieur 9 qui communique seulement avec l'orifice de sortie 3b, comme illustré sur la figure 1.

En référence à présent aux figures 3, 4 et 6, on peut voir dans cet exemple que la pièce annulaire 24 a une forme de dôme et s'étend entre un grand bord annulaire B1 raccordé à la cuve 25 et un petit bord annulaire B2 qui délimite un passage pour le raccord externe 28. Ici, le raccord externe 28 est en effet distinct de la pièce annulaire 24 à travers laquelle il est inséré. Une collerette 28c formée sur la périphérie du corps tubulaire 28a permet de limiter le déplacement axial, du raccord externe 28 par rapport à la pièce annulaire 24. Grâce à cette retenue, la connexion étanche entre l'extrémité 281 et la paroi supérieure PS du réservoir 13 est préservée vis-à-vis des efforts qui s'exercent au moment de l'insertion ou du retrait de l'embout de connexion 35. Bien entendu d'autres formes de fixation peuvent être utilisées pour maintenir le raccord externe 28 solidaire de l'enceinte d'additif E.

Pour la connexion de l'enceinte d'additif E à l'élément filtrant 4, on peut avoir recours à diverses options dont l'une correspond à un emboitement de l'extrémité de fixation 10 :

-   avec une connexion, ici étanche, par contact et frottement entre la portion de surface 24a et la surface continue 7d du flasque proximal 7 ; et/ou

- avec encliquetage à l'aide de clips 24b qui font saillie radialement vers l'extérieur depuis une surface périphérique de l'extrémité de fixation 10, les clips 24b étant engagés au-delà d'une ou plusieurs butées 8b appartenant à l'élément filtrant 4.

Dans l'exemple non limitatif des figures 4 et 6, l'enceinte d'additif E est montée inséparable de l'élément filtrant 4 par emboitement dans l'espace intérieur de l'extrémité de fixation 10. Les clips 24b s'opposent au retrait de l'extrémité de fixation 10 du fait de la butée 8b formée à l'extrémité inférieure 8a de l'élément d'armature 8. Alternativement, ce type de butée peut être formé par au moins un rebord interne annulaire du flasque proximal 7.

Bien que ces figures montrent des clips 24b saillants agencés dans la pièce annulaire 24 entre la portion de surface annulaire 24a et la lèvre d'étanchéité 24d, d'autres possibilités de retenue peuvent être prévues, par exemple avec engagement de reliefs saillants du flasque proximal 7 dans des fenêtres formées dans l'extrémité de fixation.

Plus généralement, on comprend que l'extrémité de fixation 10 présente des moyens de fixation qui peuvent s'étendre au-delà de l'extrémité inférieure 5c du média filtrant pour permettre un raccordement de l'enceinte d'additif E sans encombrement additionnel dans le sens de la hauteur. On peut ainsi noter sur la figure 6 que la distance axiale H1 entre l'extrémité inférieure 5c du média filtrant 5 et la paroi supérieure PS du réservoir d'additif 13 peut être faible (inférieure à 10 mm par exemple) et typiquement inférieure ou égale à la hauteur H2 du flasque distal 6.

Un mode de réalisation du dispositif de libération d'additif 32 va à présent être décrit en référence aux figures 1, 9 et 10.

Le dispositif de libération d'additif 32 comprend ici une électrovanne ou un dispositif actionneur 62 similaire permettant l'obturation totale ou partielle du canal de distribution DC. Le dispositif de libération d'additif 32 peut être rendu solidaire du couvercle 3. En partant de l'état assemblé du filtre 1, on comprend que ce dispositif 32 est fixe en translation selon l'axe longitudinal A par rapport au couvercle 3, afin de pouvoir être entièrement extrait de l'espace intérieur 9 lors d'une opération de rechange de la cartouche CC. L'embout de connexion 35 est engagé sans encliquetage avec le raccord externe 28, l'étanchéité étant de préférence radiale (obtenue par au moins une zone d'étanchéité annulaire), de sorte que le déplacement du dispositif de libération d'additif 32 pour sortir de l'espace intérieur 9 n'est pas gêné par des surfaces de retenue axiale.

Le dispositif de libération d'additif 32 comprend par exemple un fourreau externe F de protection du dispositif actionneur 62. Ce fourreau F peut comporter aussi un conduit de communication 50 qui permet un remplissage du volume périphérique V3 en carburant en passant par l'espace intérieur 9 au travers du flasque 6 de l'élément filtrant 4. La pression de carburant dans le volume périphérique V3 est identique à la pression de carburant filtré qui circule dans le canal de carburant 52 du couvercle 3 en amont du venturi 22, à la différence près de la perte de charge générée par la conception. Le conduit de communication 50 peut être remplacé par tout type de circuit permettant de diriger le carburant, de préférence le carburant propre, vers un quelconque volume périphérique V3 pouvant envelopper tout ou partie du réservoir 13. Il faut juste s'assurer que la section du conduit de communication 50 soit au moins trois fois supérieure à celle du tube de transport 66.

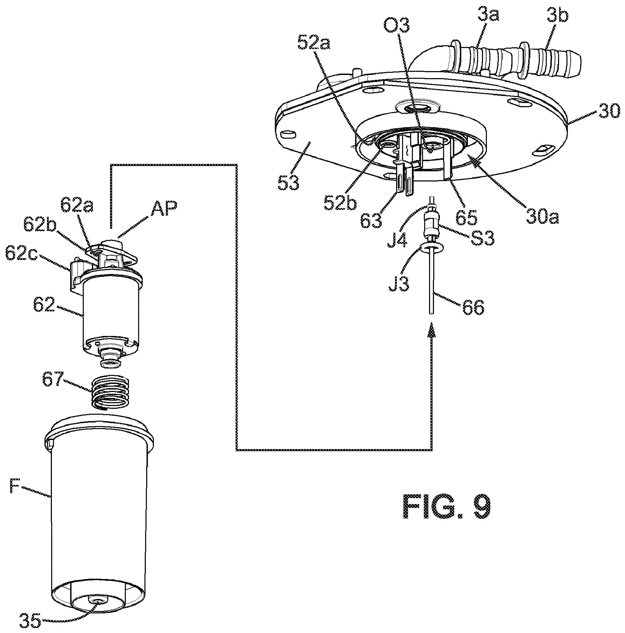

Le fourreau F est ici attaché fixement à la partie d'obturation 30, par exemple par soudure, collage ou autres moyens conventionnels de fixation étanche. En référence à la figure 9, la zone de jonction annulaire avec le fourreau F entoure une portion centrale 30a de la partie d'obturation 30. Dans cette portion centrale 30a on trouve, du côté faisant face à l'espace intérieur 9, une fiche électrique 63, une ouverture 03 de passage pour le canal de distribution DC, un conduit débouchant dans le canal de carburant 52 et formant un passage latéral 52b destiné à prolonger le conduit de communication 50 permettant un équilibrage de pression. Cette portion centrale 30a peut aussi comporter des éléments de guidage et fixation du composant actionneur 62, ici formant des pattes de retenue 65 (retenue typiquement par encliquetage), qui font saillie vers l'espace intérieur 9.

Lors de l'assemblage du dispositif de libération d'additif 32, on peut prévoir à titre d'exemple non limitatif les étapes suivantes :

- insertion d'un tube de transport 66 pour l'additif liquide dans l'ouverture 03, sachant que ce tube de transport 66 est préalablement monté dans un support S3 ayant une forme générale annulaire ;
- montage étanche du support S3 sur une extrémité axiale du composant actionneur 32 (extrémité du côté de la partie d'obturation 30), avec utilisation d'un ou plusieurs joints J3, J4, par exemple annulaires, en contact avec le tube de transport 66 pour réaliser une étanchéité entre le compartiment 64 et le canal de carburant 52 ;
- raccordement électrique à la fiche électrique 63 d'un connecteur 62c décalé latéralement sur le composant actionneur 62 ;
- attachement avec retenue à la partie d'obturation 30 du composant actionneur 62 par engagement des pattes de retenue 65 dans des fentes 62a (formées sur une bride 62b du composant actionneur 62) ;
- mise dans un état énergisé d'un organe de rappel élastique en appui sur une partie du fourreau F, ici par compression d'un ressort 67, de façon à solliciter le support S3 vers une position qui permet au tube de support 66 d'affleurer au niveau d'une face interne du canal de carburant 52 ; et

- fixation du fourreau F sur la portion d'obturation 30, de façon à ce que l'entrée d'additif E1 forme l'unique passage d'entrée du canal de distribution DC et l'orifice de distribution 34 forme l'unique sortie de ce canal de distribution DC.

En référence à la figure 10, l'élément de rappel élastique, ici un ressort hélicoïdal 67, peut être utilisé pour solliciter le support S3 vers sa position définitive, au moment de l'assemblage du dispositif de libération d'additif 32 à l'intérieur du fourreau F. L'élément de rappel élastique rattrape l'éventuel jeu axial entre le support S3 et le composant actionneur 62. On comprend que le composant actionneur 62 peut glisser longitudinalement dans le compartiment 64 et s'engager contre la tubulure interne 69 par un contact radial, et non en appui axial. A l'état monté du dispositif de libération d'additif 32, celui-ci est solidaire du couvercle 3 et peut se déplacer avec celui-ci par coulissement lors d'une étape déconnexion au réservoir d'additif 13.

Lorsque le support S3 est rendu solidaire du composant actionneur 62 et calé dans sa position définitive, le tube de transport 66 est suffisamment inséré dans le passage d'additif AP axial du composant actionneur 62, de façon à définir un tronçon du canal de distribution DC qui s'étend depuis l'intérieur du dispositif actionneur 62 jusqu'au canal de carburant 52. Lorsqu'on utilise une électrovanne, on peut insérer avec étanchéité le tube de transport 66 dans le passage d'additif AP axial par simple liaison glissante ajustée et/ou montage coulissant avec au moins un joint annulaire J3.

Lorsqu'il est prévu un conduit de communication 50 dans le fourreau F, on peut prévoir une fixation de ce dernier à la partie centrale 30a qui délimite une zone d'étanchéité annulaire spécifique à l'extrémité de jonction du conduit de communication 50 avec le conduit formant le passage latéral 52b. on peut voir sur la figure 10 que le conduit de communication 50 débouche axialement par deux ouvertures opposées 50a et 50b.

Dans l'exemple non limitatif des figures 1 et 10, ce conduit de communication 50 est séparé de façon étanche du compartiment 64 dans lequel est logé le composant actionneur 62 tel qu'une électrovanne ou composant fonctionnel similaire. Ainsi le carburant ne pénètre ni autour de l'électrovanne ni dans l'entrée d'additif E1 du canal de distribution DC qui forme par exemple un débouché du compartiment 64 vers le réservoir 13. Au moins un joint annulaire J5 peut être monté sur le composant actionneur 62 pour réaliser une étanchéité entre le compartiment 64 et le canal de distribution DC. Plus généralement, on comprend que l'additif liquide circule ici dans un canal étanche aux liquides pour être diffusé exclusivement dans le canal de carburant 52. Le canal de distribution DC est en partie formé par le tube de transport 66 qui est monté dans le support S3. On peut placer ce support S3 entre le dispositif actionneur 62, ici l'électrovanne, et la partie d'obturation 30 du couvercle 3, et de préférence avec un contact direct contre ces éléments 62, 30.

Comme cela est bien visible sur la figure 10, l'axe du tube de transport 66 peut être décalé par rapport à l'axe de passage X (qui correspond ici à l'axe longitudinal de l'embout de connexion 35). Cette configuration est choisie ici pour placer le conduit de communication 50 dans une zone de périphérie par rapport au composant actionneur 62. L'extrémité de ce dernier proche de l'embout de connexion 35 peut coopérer de manière étanche avec une tubulure interne 69 du fourreau F, optionnellement avec l'utilisation d'au moins un joint. L'additif liquide peut ainsi s'écouler depuis l'entrée d'additif E1 vers le tube de transport 66 sans circuler autour du composant actionneur 62 à l'intérieur du fourreau F. On protège ainsi les composants internes du dispositif de libération 32. Le fait de canaliser ainsi l'additif qui circule seul dans un canal de distribution DC plus étroit que le canal de carburant 52 permet d'utiliser efficacement la dépression liée à l'accroissement de la vitesse de carburant dans le venturi 22.

Dans une forme de réalisation préférée, le canal de carburant 52 comporte une restriction de section formant le venturi 22 à distance du passage d'entré 52a et à distance de la sortie 3b, et permettant l'effet d'accélération. Le canal de carburant 52 est par exemple délimité par une pièce 53 moulée en plastique qui comporte une face supérieure 53a et une face inférieure 53b depuis laquelle fait saillie une tubulure 53c selon une direction parallèle à l'axe longitudinal A à l'état monté de l'élément filtrant 4. La tubulure 53c peut permettre de définir avec le flasque 6 de l'élément filtrant 4 une zone annulaire d'étanchéité couvercle-élément filtrant, comme visible sur la figure 1. La face supérieure 53a peut être recouverte par une paroi externe 3c du couvercle 3 qui présente ici l'orifice d'entrée 3a et l'orifice de sortie 3b. Des éléments formant bouchon 54, 55 sont engagés de manière étanche dans les extrémités du canal de carburant 52, afin d'empêcher le carburant de venir en contact avec la paroi supérieure 3. De plus, ils permettent de guider le carburant vers le venturi 22 d'une part, et le carburant chargé en additif vers la sortie 3b d'autre part.

Le tube de transport 66 du canal de distribution DC est disposé de préférence perpendiculairement au canal de carburant 52. Comme illustré sur la figure 10, il peut être optionnellement prévu un accroissement de section entre le venturi 22 et la sortie de carburant 3b, afin de redonner au carburant chargé en additif une vitesse proche de celle du carburant entrant dans le canal de carburant 52.

On comprend que le tube de transport 66 peut présenter un diamètre interne relativement faible, par exemple inférieur ou égal à 2 mm et de préférence inférieur à 1 mm. La finesse de ce tube de transport 66 (dont la longueur est typiquement au moins égale à 10 mm, et de préférence au moins 20 mm) renforce la dépression générée par le venturi 22. Le cas échéant, ce tube de transport 66 peut avoir une fonction de capillaire. Dans ce cas, en fonction du débit de diffusion qu'il y aurait à travers ce type de capillaire, il est permis dans une variante de supprimer le venturi 22 et éventuellement diffuser via le tube de transport 66, par exemple sur le circuit retour.

La présence d'un élément obturant (non illustré) dans le composant actionneur 62 permet d'éviter ou de limiter une diffusion circonstancielle de l'additif liquide dans le canal de carburant 52 (par exemple lorsque le véhicule est lui-même transporté).

La commande de diffusion d'additif depuis le réservoir 13 de l'enceinte d'additif E jusqu'à l'orifice de distribution 34 va à présent être décrit en référence aux figures 1, 5 et 10.

Pendant le fonctionnement du filtre 1, le carburant circule de manière continue entre les orifices 3a et 3b d'entrée et de sortie du carburant. Le venturi 22, qui constitue ici le moyen de génération de différence de pression, génère une dépression entre l'orifice 34 de distribution d'additif et l'orifice 3b de sortie de carburant. Comme l'enceinte d'additif E communique par le conduit 50 avec l'orifice 3b de sortie de carburant, le volume périphérique V3 est rempli de carburant à la même pression que le carburant circulant à l'orifice 3b de sortie de carburant. La paroi P du réservoir d'additif 13, qui constitue ici une paroi mobile et étanche, maintient une pression identique entre l'additif dans le réservoir d'additif 13 et le carburant dans le volume périphérique V3.

La pression dans le réservoir d'additif 13 est donc supérieure à la pression régnant au niveau de l'orifice 34 de distribution, ce qui contraint l'additif à se déplacer du réservoir 13 vers l'orifice 34 de distribution puis à se diffuser dans le carburant circulant dans le venturi 22 et donc dans le circuit de circulation de carburant C1. Le dispositif actionneur 62 permet d'empêcher totalement ou partiellement la circulation de l'additif. A titre d'exemple, une électrovanne permettant de stopper la distribution d'additif à l'arrêt du moteur est utilisée. Une électrovanne d'un type connu en soi peut être utilisée, avec un élément obturant adapté pour obturer le canal de distribution DC. On utilise par exemple un élément obturant conventionnel (non représenté) mobile dans le sens axial, parallèlement à l'axe longitudinal A. Le siège sur lequel vient en appui cet élément obturant, dans la position d'obturation, est généralement situé dans une zone de jonction entre deux tronçons du canal de distribution DC. Le déplacement peut être réalisé suivant la commande d'un électroaimant, de façon connue en soi (typiquement en fonction d'une commande électrique reçue par le dispositif de libération d'additif 32). Une électrovanne dont la plus grande dimension est de l'ordre de 10 cm peut convenir pour ce genre d'application.

Dans cet exemple de réalisation, le dispositif actionneur 62 est illustré sous la forme d'un moyen électromécanique d'obturation totale ou partielle du canal de distribution DC de l'additif. L'utilisation d'un tel moyen est cependant facultative et on pourra évidemment réaliser l'invention sans obturer le canal de distribution DC ou à l'aide d'autres moyens d'obturation du canal de distribution d'additif, par exemple un thermoclapet, un clapet « parapluie », un clapet anti-retour ou un clapet à commande hydraulique.

Par ailleurs, dans un exemple non limitatif, l'additif peut être chauffé avant l'injection dans le circuit C1 de circulation de carburant. Selon une option préférée, l'additif qui sort du réservoir 13 est chauffé avant son passage dans le canal de distribution DC. Un organe à surface chauffante peut ainsi être placé à proximité ou dans la première extrémité axiale 32a. Il est permis de chauffer l'additif à une température comprise par exemple entre 30 et 60°C. Un des avantages lié au réchauffage de l'additif est de permettre sa diffusion au travers du canal de distribution DC à une température sensiblement constante, et donc à une viscosité constante. Lorsque le canal de distribution DC est formé par un capillaire (de diamètre très faible), le fait d'éviter des variations de la viscosité de l'additif permet de contrôler avec précision le volume d'additif injecté. Un tel chauffage est utile en particulier pour compenser des variations de viscosité dues à un chauffage local non contrôlé par le dispositif actionneur 62.

Afin d'optimiser l'échange de calories (minimiser les pertes thermiques et l'apport en énergie dédié au chauffage), on préfère chauffer l'additif à proximité de l'entrée du canal de distribution DC plutôt que l'additif contenu dans le réservoir 13.

Dans un mode de réalisation, la tête de diffusion 32 peut présenter un dispositif de chauffage (non représenté), par exemple électrique, pourvu d'un connecteur qui est accessible extérieurement sur le couvercle 3 ou partie de boîtier analogue. Un fil de liaison, par exemple noyé dans la paroi latérale de la tête de diffusion 32, peut permettre de faire la liaison entre le connecteur et l'organe à surface chauffante du dispositif de chauffage. L'organe à surface chauffante peut être porté par une plaque ou composant analogue de circuit électronique. Dans ce cas, la surface chauffante est typiquement formée par un ou plusieurs éléments chauffants PTC (Coefficient de Température Positif).

Alternativement, le chauffage au niveau de la première extrémité axiale 32a peut résulter d'un chauffage du carburant qui traverse ensuite le média filtrant 5 et peut passer dans un canal qui traverse et/ou entoure la première extrémité axiale 32a. Plus généralement, on comprend que l'additif peut être chauffé en amont de l'orifice de distribution 34, de préférence entre l'embout de connexion 35 et une entrée du canal de distribution DC.

Dans des variantes de réalisation, le volume périphérique V3 peut être rempli en carburant de la zone d'amont Z1 ou le réservoir d'additif 13 peut être soumis à une pression d'un autre fluide et/ou issue d'un générateur de pression.

Un des avantages de l'invention réside dans le mode de montage d'une partie insérable 31 du couvercle 3 au travers de l'élément filtrant 4 pour réaliser la connexion avec l'enceinte d'additif E, ce qui peut permettre d'éviter le contact avec la sortie du réservoir d'additif 13 et minimise l'encombrement.

Un autre avantage réside dans l'utilisation d'un réservoir 13 souple pouvant se contracter pleinement et se refermer sur lui-même du fait de la possibilité pour la paroi P, initialement conformée en bol, de se rapprocher sans entrave de la paroi supérieure PS (au fur et à mesure que l'additif liquide est diffusé dans le circuit C1). Bien entendu, le réservoir 13 peut se présenter avec une géométrie différente d'une poche simple arrondie par le dessous et l'exemple des figures est seulement donné à titre d'illustration.

Le dispositif de l'invention permet de véhiculer tout type d'additif contenu dans un carburant. Ces additifs peuvent être classés en deux catégories : d'une part ceux qui ont une fonction catalytique d'aide à la régénération des filtres à particules (FAP), habituellement dénommés Fuel Borne Catalyst (FBC) et d'autre part ceux qui ont une fonction autre qu'une fonction catalytique.

Les additifs peuvent être sous forme liquide ou solide.

Les additifs FBC peuvent se présenter sous la forme d'un sel ou d'un complexe organométallique ou d'un mélange de ces sels ou complexes, solubles ou dispersibles dans le carburant. Ils peuvent aussi se présenter sous forme d'une dispersion colloïdale. Les colloïdes de cette dispersion peuvent être notamment à base d'un composé d'une terre rare et/ou d'un métal choisi dans les groupes IIA, IVA, VIIA, VIII, IB, IIB, IIIB et IVB de la classification périodique.

Ils peuvent être plus particulièrement à base de composés du cérium et/ou du fer.

La classification périodique des éléments à laquelle il est fait référence est celle publiée dans le Supplément au Bulletin de la Société Chimique de France n° 1 (janvier 1966).

On peut aussi utiliser des dispersions colloïdales qui comprennent des compositions détergentes.

Comme exemple de dispersions colloïdales on peut mentionner celles décrites dans les demandes de brevets EP 671205, WO 97/19022, WO 01/10545 et WO 03/053560, ces deux dernières décrivant notamment des dispersions à base de composés de cérium et de fer respectivement, ces dispersions contenant en outre un agent amphiphile.

Les demandes WO 2012/084838 et WO 2012/084851 décrivent par ailleurs des dispersions de fer sous forme cristallisée qui peuvent aussi être utilisées.

On peut aussi mentionner les demandes WO 2010/150040, WO 2012/084906 et WO 2012/097937 qui décrivent des dispersions colloïdales à base d'un composé du fer, d'un agent amphiphile et d'une composition détergente comprenant un sel d'ammonium quaternaire.

D'autres types d'additifs connus, différents des FBC et qui ont une fonction autre qu'une fonction catalytique, peuvent également être injectés dans le circuit à carburant. Ces additifs permettent l'amélioration de la distribution du carburant dans le moteur et/ou l'amélioration des performances du fonctionnement du moteur et/ou encore l'amélioration de la stabilité du fonctionnement du moteur.

On peut citer à titre d'exemple les additifs antimousse, les additifs dégivrants, les additifs polymériques réduisant la température à laquelle le carburant se trouble ou se fige, les additifs favorisant l'écoulement.

Des additifs inhibiteurs de corrosion peuvent également être utilisés.

Des additifs d'amélioration des performances de fonctionnement des moteurs peuvent aussi être mis en oeuvre, comme les additifs procétane, les additifs prooctane, les additifs inhibiteurs de fumée, les additifs réduisant les pertes par friction appelés additifs FM pour « Friction Modifier » ou additifs « d'extrême pression ».

Des additifs détergents, destinés à limiter tout dépôt au niveau des injecteurs, peuvent également être utilisés.

Des additifs d'amélioration du pouvoir lubrifiant peuvent également être utilisés pour éviter l'usure ou le grippage des pompes à haute pression notamment et des injecteurs, le pouvoir lubrifiant des carburants étant lui médiocre.

Des additifs d'amélioration de la stabilité de fonctionnement des moteurs peuvent être envisagés. Les additifs de type antioxydants, stabilisateurs, désactivateurs de métaux visant à neutraliser les effets catalytiques de certains métaux; des additifs dispersants visant à disperser les particules formées et prévenir l'agglomération de particules assez grosses peuvent également être mis en oeuvre.

Selon un mode de réalisation particulier, l'additif est une combinaison d'un additif détergent et d'un additif de lubrification, et éventuellement d'un additif inhibiteur de corrosion.

L'additif de type FBC associé à un additif de performance carburant de type détergent comme décrit plus haut (demande de brevet WO 2010/150040) est particulièrement avantageux dans le cas d'un véhicule équipé d'un filtre à particules.

Dans ce même cas, on aura avantage également à associer à un additif de type FBC plusieurs additifs de performance carburant, notamment lorsque le véhicule est commercialisé dans une zone géographique où le carburant est de qualité variable et/ou médiocre.

Dans le cas d'un véhicule non équipé d'un filtre à particules, différents types d'associations d'additifs peuvent être envisagés comme celle associant un ou plusieurs détergents à un additif de lubrification et à un inhibiteur de corrosion.

Il doit être évident pour les personnes versées dans l'art que la présente invention permet des modes de réalisation sous de nombreuses autres formes spécifiques sans l'éloigner du domaine d'application de l'invention comme revendiqué. En particulier, bien que la description mentionne quelques exemples pour la réalisation des zones d'étanchéité, l'homme du métier peut apprécier que toute autre forme de réalisation permettant d'obtenir une étanchéité annulaire convient pour la zone d'étanchéité entre l'élément filtrant 4 et le couvercle 3 (idem pour une zone d'étanchéité entre l'élément filtrant 4 et l'enceinte d'additif E).

De plus, il doit être compris que la différence de pression n'est pas forcément générée par un phénomène de dépression, par exemple par un venturi 22 (sachant que l'utilisation d'un diaphragme est une alternative au venturi 22), et peut aussi résulter de la création d'une surpression qui s'exerce sur la face externe d'au moins une paroi P du réservoir d'additif 13. On comprend aussi que le moyen de génération de différence de pression peut être l'élément filtrant 4, la portion d'obturation 30 pouvant dans ce cas être dépourvue de venturi et le conduit d'équilibrage de pression 50 formé dans la partie d'insertion 31 peut être supprimé.

**Revendications**

1.  Filtre à carburant (1), comportant :

    - un boîtier (2, 3) s'étendant entre une première extrémité qui définit un fond (2a) et une deuxième extrémité formée par un couvercle (3), le boîtier délimitant un volume intérieur (V1) et présentant une entrée de carburant brut (3a) et une sortie de carburant filtré (3b) ;
    - un élément filtrant (4) qui est disposé dans le volume intérieur (V1) et qui comporte une première extrémité axiale engagée contre le couvercle (3), une deuxième extrémité axiale et un média filtrant (5) sensiblement annulaire s'étendant entre la première extrémité axiale et la deuxième extrémité axiale, le média filtrant (5) ayant une face interne (5b) qui délimite un espace intérieur (9) ;
    - un réservoir d'additif (13) contenant un additif liquide adapté pour être mélangé avec du carburant ; et
    - un dispositif de libération d'additif (32) pour distribuer l'additif liquide dudit réservoir (13) dans un circuit (1) de circulation de carburant pour moteur à combustion interne, le dispositif de libération d'additif comprenant un canal de distribution (DC) et au moins un composant actionneur (62) adapté pour sélectivement obturer totalement ou partiellement ledit canal de distribution, sachant qu'au moins pour une position d'ouverture du composant actionneur (62), le canal de distribution (DC) est en communication fluidique avec le réservoir d'additif (13) et débouche dans un canal de carburant (52) du couvercle (3) de plus grande section transversale que le canal de distribution (DC) ;

    **caractérisé en ce que** le dispositif de libération d'additif (32) s'étend au moins partiellement dans l'espace intérieur (9), ledit composant actionneur (62) s'étendant dans l'espace intérieur (9) et de préférence à distance de la deuxième extrémité du boîtier.

2.  Filtre selon la revendication 1, dans lequel le dispositif de libération d'additif (32) est solidaire d'une partie de boîtier choisie parmi le fond (2a) et le couvercle (3) et fixe en translation selon un axe longitudinal (A) de l'élément filtrant (4) par rapport à cette partie de boîtier.

3.  Filtre selon la revendication 1 ou 2, comprenant un fourreau (F) ayant une extrémité libre (35) adaptée pour se raccorder au réservoir d'additif (13), le fourreau (F) comportant :

    - un compartiment (64) à l'intérieur duquel le composant actionneur (62) est logé ; et
    - un conduit (50) séparé du compartiment (64) et débouchant axialement par deux ouvertures opposées (50a, 50b), l'une des deux ouvertures opposées (50a) faisant communiquer le conduit (50) avec le canal de carburant (52) du couvercle (3).

4.  Filtre selon la revendication 3, dans lequel le dispositif de libération d'additif (32) comporte un tube de transport d'additif qui définit une partie du canal de distribution (DC), le tube de transport (66) étant inséré dans un passage d'additif du composant actionneur (62), et dans lequel au moins un joint annulaire (J3, J4) est monté sur le tube de transport (66) pour réaliser une étanchéité entre le compartiment (64) et le canal de carburant (52) du couvercle (3), et dans lequel au moins un joint annulaire (J5) est monté sur le composant actionneur (62) pour réaliser une étanchéité entre le compartiment (64) et le canal de distribution (DC).

5.  Filtre selon la revendication 3 ou 4, dans lequel :

    - l'élément filtrant (4) délimite une zone d'amont (Z1) communiquant avec l'entrée de carburant brut (3a) et une zone d'aval (Z2) communiquant avec la sortie de carburant filtré (3b) ;
    - la zone d'aval (Z2) comprend dans l'espace intérieur (9) une première sous-zone (Z21) interne au fourreau (F) qui est délimitée par ledit conduit (50) et une deuxième sous-zone (Z22) externe au fourreau (F) qui s'étend de façon annulaire entre la face interne (5b) du média filtrant (5) et une face externe du fourreau (F).

**6.** Filtre selon l'une quelconque des revendications précédentes, dans lequel l'entrée de carburant brut (3a) et la sortie de carburant filtré (3b) sont agencées à distance dudit fond (2a), le canal de distribution (DC) définissant un orifice (34) de distribution de l'additif liquide qui débouche dans ledit canal de carburant (52) du couvercle (3), l'orifice (34) de distribution d'additif étant distinct des orifices d'entrée et de sortie de carburant (3a, 3b).

**7.** Filtre selon la revendication 6, dans lequel le canal de carburant (52) du couvercle (3) comprend un venturi (22) pour générer une différence de pression entre l'orifice d'entrée (3a) ou de sortie de carburant (3b) et l'orifice (34) de distribution d'additif.

**8.** Filtre selon l'une quelconque des revendications précédentes, dans lequel le canal de carburant (52) du couvercle (3) communique avec l'espace intérieur (9) par l'intermédiaire d'au moins un conduit (50) traversant la première extrémité axiale de l'élément filtrant (4), ledit canal de carburant (52) étant délimité par une pièce (53) moulée en plastique qui comporte :

- une face supérieure (53a), optionnellement recouverte par une paroi externe du couvercle (3) qui présente l'un au moins parmi l'orifice d'entrée (3a) et l'orifice de sortie (3b) ; et
- une face inférieure (53b) depuis laquelle fait saillie une tubulure (53c) selon une direction parallèle à un axe longitudinal (A) de l'élément filtrant (4), ladite tubulure (53c) définissant avec la deuxième extrémité axiale (6) de l'élément filtrant (4) une zone annulaire d'étanchéité couvercle-élément filtrant.

**9.** Filtre selon l'une quelconque des revendications précédentes, dans lequel ledit canal de carburant (52) du couvercle (3) communique avec la sortie (3b) de carburant filtré et comprend :

- un passage d'entrée (52a) qui communique avec l'espace intérieur (9) et débouche à proximité de la première extrémité axiale (6) de l'élément filtrant (4) ; et
- un passage latéral (52b), situé entre le passage d'entrée (52a) et la sortie (3b) de carburant filtré,

et dans lequel le réservoir d'additif (13) fait partie d'une enceinte d'additif (E) et délimite avec une enveloppe externe (12) de ladite enceinte (E) un volume périphérique (V3) qui communique de façon étanche avec ledit passage latéral (52b).

**10.** Filtre selon la revendication 9, dans lequel le réservoir d'additif liquide (13) présente au moins une paroi mobile (P) et étanche entre un volume interne (V2) du réservoir d'additif et le volume périphérique (V3) délimité par l'enveloppe externe (12), ladite paroi mobile (P) assurant d'une part une séparation étanche et contribuant d'autre part à maintenir une pression identique entre l'additif dans le réservoir d'additif (13) et le carburant dans le volume périphérique (V3).

**11.** Filtre selon la revendication 9 ou 10, comprenant dans l'espace intérieur (9), parallèlement au canal de distribution (DC), un conduit (50) d'équilibrage de pression qui communique avec le canal de carburant (52) du couvercle (3) et s'étend jusqu'à proximité de la deuxième extrémité axiale (7) de l'élément filtrant (4) pour communiquer avec ledit volume périphérique (V3).

**12.** Filtre selon la revendication 11 lorsqu'elle dépend de la revendication 5, dans lequel le conduit (50) d'équilibrage de pression débouche par le passage latéral (52b) dans le canal de carburant (52) et est séparé de façon étanche de la deuxième sous-zone (Z22) par un contact annulaire étanche entre le fourreau (F) et une surface d'étanchéité, de préférence une lèvre annulaire (24d), formée sur l'enveloppe externe (12), ce grâce à quoi la pression dans le volume périphérique (V3) correspond à la pression au niveau du passage latéral (52b).

**13.** Filtre selon l'une quelconque des revendications précédentes, dans lequel le boîtier (2, 3) comporte :

- un bol (2) comprenant le fond (2a) et adapté pour loger le réservoir d'additif (13) ; et
- ledit couvercle (3) qui comporte une partie d'obturation (30) recouvrant le bol (2) et une partie d'insertion (31) qui s'étend dans l'espace intérieur (9), la partie d'obturation (30) incluant l'orifice d'entrée (3a) de carburant brut et l'orifice de sortie (3b) de carburant filtré ;
et dans lequel la partie d'insertion (31) comprend le canal de distribution (DC), ledit composant actionneur (62) et un embout de connexion (35) formé à l'opposé de la partie d'obturation (30), l'embout de connexion (35) étant adapté pour se raccorder de manière étanche au réservoir d'additif (13).

**14.** Filtre selon la revendication 13, dans lequel le dispositif de libération d'additif (32) est destiné à être monté avec le

EP 3 079 792 B1

couvercle (3) sur le circuit (1) de circulation de carburant,
et dans lequel la partie d'insertion (31) a une forme générale tubulaire, l'élément filtrant (4) étant monté de façon amovible autour de la partie d'insertion (31).

**15.** Filtre selon la revendication 13 ou 14, dans lequel l'élément filtrant comporte :

- un flasque (6, 7) à chacune des première et deuxième extrémités axiales ; et
- un élément d'armature (8), de préférence tubulaire, pour protéger la face interne (5b) du média filtrant (5).

**16.** Filtre selon l'une quelconque des revendications précédentes, dans lequel le composant actionneur (62) comprend un élément obturant qui est déplacé en fonction d'une commande électrique reçue par le dispositif de libération d'additif (32).

**17.** Filtre à carburant selon l'une quelconque des revendications précédentes, comportant au moins un dispositif de chauffage configuré pour chauffer l'additif en amont de l'orifice (34) de distribution.


**Patentansprüche**

**1.** Kraftstofffilter (1), aufweisend:

- ein Gehäuse (2, 3), das sich zwischen einem ersten Ende, das einen Boden (2a) definiert, und einem zweiten Ende, das von einem Deckel (3) gebildet ist, erstreckt, wobei das Gehäuse ein Innenvolumen (V1) begrenzt und einen Einlass (3a) für unbehandelten Kraftstoff und einen Auslass (3b) für gefilterten Kraftstoff aufweist,
- ein Filterelement (4), das in dem Innenvolumen (V1) angeordnet ist und das ein erstes axiales Ende aufweist, das am Deckel (3) anliegt, wobei sich ein zweites axiales Ende und ein im Wesentlichen ringförmiges Filtermedium (5) zwischen dem ersten axialen Ende und dem zweiten axialen Ende erstrecken, wobei das Filtermedium (5) eine Innenseite (5b) hat, die einen Innenraum (9) begrenzt,
- einen Additivvorratsbehälter (13), der ein flüssiges Additiv enthält, das zum Mischen mit Kraftstoff geeignet ist, und
- eine Additivausgabevorrichtung (32) zur Ausgabe des flüssigen Additivs aus dem Behälter (13) in einen Kraftstoffzirkulationskreis (1) für einen Verbrennungsmotor, wobei die Additivausgabevorrichtung eine Ausgabeleitung (DC) und mindestens ein Aktuatorbauteil (62), um wahlweise vollständig oder teilweise die Ausgabeleitung zu verschließen, umfasst, wobei die Ausgabeleitung (DC) mindestens für eine geöffnete Stellung des Aktuatorbauteils (62) in Fluidkommunikation mit dem Additivvorratsbehälter (13) ist und in eine Kraftstoffleitung (52) des Deckels (3) mit größerem Querschnitt als die Ausgabeleitung (DC) ausmündet,

**dadurch gekennzeichnet, dass** sich die Additivausgabevorrichtung (32) mindestens teilweise in dem Innenraum (9) erstreckt, wobei sich das Aktuatorbauteil (62) in dem Innenraum (9) und vorzugsweise beabstandet vom zweiten Ende des Gehäuses erstreckt.

**2.** Filter nach Anspruch 1, wobei die Additivausgabevorrichtung (32) mit einem Teil des Gehäuses, das aus dem Boden (2a) und dem Deckel (3) ausgewählt ist, fest verbunden ist und gemäß einer Längsachse (A) des Filterelements (4) in Bezug zu diesem Teil des Gehäuses verlagerbar befestigt ist.

**3.** Filter nach Anspruch 1 oder 2, umfassend eine Hülse (F), die ein freies Ende (35) hat, das für eine Verbindung mit dem Additivvorratsbehälter (13) geeignet ist, wobei die Hülse (F) aufweist:

- ein Fach (64), in dessen Innern das Aktuatorbauteil (62) untergebracht ist, und
- eine Leitung (50), die von dem Fach (64) getrennt ist und durch zwei gegenüberliegende Öffnungen (50a, 50b) axial ausmündet, wobei die eine der zwei gegenüberliegenden Öffnungen (50a) die Kommunikation der Leitung (50) mit der Kraftstoffleitung (52) des Deckels (3) bewirkt.

**4.** Filter nach Anspruch 3, wobei die Additivausgabevorrichtung (32) ein Additivbeförderungsrohr aufweist, das einen Teil der Ausgabeleitung (DC) definiert, wobei das Beförderungsrohr (66) in einen Additivdurchgang des Aktuatorbauteils (62) eingesetzt ist,
und wobei mindestens eine ringförmige Dichtung (J3, J4) auf dem Beförderungsrohr (66) angebracht ist, um eine Dichtigkeit zwischen dem Fach (64) und der Kraftstoffleitung (52) des Deckels (3) herzustellen, und wobei mindestens eine ringförmige Dichtung (J5) auf dem Aktuatorbauteil (62) angebracht ist, um eine Dichtigkeit zwischen dem Fach (64) und der Ausgabeleitung (DC) herzustellen.

5. Filter nach Anspruch 3 oder 4, wobei:

- das Filterelement (4) einen stromaufwärtigen Bereich (Z1), der mit dem Einlass (3a) für unbehandelten Kraftstoff kommuniziert, und einen stromabwärtigen Bereich (Z2), der mit dem Auslass (3b) für gefilterten Kraftstoff kommuniziert, begrenzt,
- der stromabwärtige Bereich (Z2) umfasst in dem Innenraum (9) innerhalb der Hülse (F) einen ersten Unterbereich (Z21), der von der Leitung (50) begrenzt ist, und außerhalb der Hülse (F) einen zweiten Unterbereich (Z22), der sich ringförmig zwischen der inneren Fläche (5b) des Filtermediums (5) und einer äußeren Fläche der Hülse (F) erstreckt.

6. Filter nach einem der vorangehenden Ansprüche, wobei der Einlass (3a) für unbehandelten Kraftstoff und der Auslass (3b) für gefilterten Kraftstoff beabstandet vom Boden (2a) ausgebildet sind, wobei die Ausgabeleitung (DC) eine Öffnung (34) zur Verteilung des flüssigen Additivs definiert, die in die Kraftstoffleitung (52) des Deckels (3) ausmündet, wobei sich die Additivverteileröffnung (34) von den Kraftstoffeinlass- und -auslassöffnungen (3a, 3b) unterscheidet.

7. Filter nach Anspruch 6, wobei die Kraftstoffleitung (52) des Deckels (3) ein Venturi (22) umfasst, um eine Druckdifferenz zwischen der Kraftstoffeinlassöffnung (3a) oder Kraftstoffauslassöffnung (3b) und der Additivverteileröffnung (34) zu erzeugen.

8. Filter nach einem der vorangehenden Ansprüche, wobei die Kraftstoffleitung (52) des Deckels (3) mit dem Innenraum (9) mittels mindestens einer Leitung (50) kommuniziert, die das erste axiale Ende des Filterelements (4) durchquert, wobei die Kraftstoffleitung (52) von einem Formteil (53) aus Kunststoff begrenzt ist, das aufweist:

- eine optional von einer Außenwand des Deckels (3) bedeckte Oberseite (53a), die mindestens entweder die Einlassöffnung (3a) oder die Auslassöffnung (3b) aufweist, und
- eine Unterseite (53b), von der ein Rohr (53c) gemäß einer zu einer Längsachse (A) des Filterelements (4) parallelen Richtung hervorsteht, wobei das Rohr (53c) mit dem zweiten axialen Ende (6) des Filterelements (4) einen ringförmigen Deckel-Filterelement-Dichtungsbereich definiert.

9. Filter nach einem der vorangehenden Ansprüche, wobei die Kraftstoffleitung (52) des Deckels (3) mit dem Auslass (3b) für gefilterten Kraftstoff kommuniziert und umfasst:

- einen Einlassdurchgang (52a), der mit dem Innenraum (9) kommuniziert und in der Nähe des ersten axialen Endes (6) des Filterelements (4) ausmündet, und
- einen seitlichen Durchgang (52b), der sich zwischen dem Einlassdurchgang (52a) und dem Auslass (3b) für gefilterten Kraftstoff befindet,

und wobei der Additivvorratsbehälter (13) Teil einer Additivkammer (E) ist und mit einem äußeren Mantel (12) der Kammer (E) ein Umfangsvolumen (V3) begrenzt, das mit dem seitlichen Durchgang (52b) abgedichtet kommuniziert.

10. Filter nach Anspruch 9, wobei der Vorratsbehälter für flüssiges Additiv (13) mindestens eine bewegliche und zwischen einem Innenvolumen (V2) des Additivvorratsbehälters und dem von dem äußeren Mantel (12) begrenzten Umfangsvolumen (V3) dichte Wand (P) aufweist, wobei die bewegliche Wand (P) zum einen eine abgedichtete Trennung sichert und zum anderen zur Aufrechterhaltung eines identischen Drucks zwischen dem Additiv in dem Additivvorratsbehälter (13) und dem Kraftstoff in dem Umfangsvolumen (V3) beiträgt.

11. Filter nach Anspruch 9 oder 10, der in dem Innenraum (9) parallel zu der Ausgabeleitung (DC) eine Druckausgleichsleitung (50) umfasst, die mit der Kraftstoffleitung (52) des Deckels (3) kommuniziert und sich bis in die Nähe des zweiten axialen Endes (7) des Filterelements (4) erstreckt, um mit dem Umfangsvolumen (V3) zu kommunizieren.

12. Filter nach Anspruch 11, wenn er von Anspruch 5 abhängt, wobei die Druckausgleichsleitung (50) durch den seitlichen Durchgang (52b) in die Kraftstoffleitung (52) ausmündet und von dem zweiten Unterbereich (Z22) durch einen dichten ringförmigen Kontakt zwischen der Hülse (F) und einer Dichtungsfläche, vorzugsweise einer ringförmigen Lippe (24d), die auf dem äußeren Mantel (12) ausgebildet ist, abgedichtet getrennt ist, weswegen der Druck in dem Umfangsvolumen (V3) dem Druck im Bereich des seitlichen Durchgangs (52b) entspricht.

13. Filter nach einem der vorangehenden Ansprüche, wobei das Gehäuse (2, 3) aufweist:

- eine Schale (2), die den Boden (2a) umfasst und geeignet ist, um den Additivvorratsbehälter (13) aufzunehmen, und
- den Deckel (3), der einen die Schale (2) bedeckenden Verschlussteil (30) und einen sich in dem Innenraum (9) erstreckenden Einsatzteil (31) aufweist, wobei der Verschlussteil (30) die Einlassöffnung (3a) für unbehandelten Kraftstoff und die Auslassöffnung (3b) für gefilterten Kraftstoff einschließt,

und wobei der Einsatzteil (31) die Ausgabeleitung (DC), das Aktuatorbauteil (62) und einen gegenüber dem Verschlussteil (30) ausgebildeten Verbindungsansatz (35) umfasst, wobei der Verbindungsansatz (35) geeignet ist, um sich dicht mit dem Additivvorratsbehälter (13) zu verbinden.

14. Filter nach Anspruch 13, wobei die Additivausgabevorrichtung (32) bestimmt ist, mit dem Deckel (3) auf der Kraftstoffzirkulationsleitung (1) angebracht zu sein, und wobei der Einsatzteil (31) eine allgemein rohrförmige Form hat, wobei das Filterelement (4) lösbar um den Einsatzteil (31) angebracht ist.

15. Filter nach Anspruch 13 oder 14, wobei das Filterelement aufweist:

- einen Flansch (6, 7) an sowohl dem ersten als auch zweiten axialen Ende, und
- ein vorzugsweise rohrförmiges Armierungselement (8), um die Innenseite (5b) des Filtermediums (5) zu schützen.

16. Filter nach einem der vorangehenden Ansprüche, wobei das Aktuatorbauteil (62) ein Verschlusselement umfasst, das in Abhängigkeit von einem von der Additivausgabevorrichtung (32) empfangenen elektrischen Befehl verlagert wird.

17. Kraftstofffilter nach einem der vorangehenden Ansprüche, der mindestens eine Heizvorrichtung aufweist, die konfiguriert ist, um das Additiv stromaufwärts der Verteileröffnung (34) zu erwärmen.

## Claims

1. Fuel filter (1), comprising:

- a housing (2, 3) extending between a first end defining a base (2a) and a second end formed by a cover (3), the housing delimiting an internal volume (V1) and having an inlet (3a) for unfiltered fuel and an outlet (3b) for filtered fuel;
- a filter element (4) which is arranged in the internal volume (V1) and which has a first axial end engaged against the cover (3), a second axial end, and a substantially annular filter medium (5) extending between the first axial end and the second axial end, the filter medium (5) having an inner face (5b) defining an inner space (9);
- an additive tank (13) containing a liquid additive suitable for mixing with fuel; and
- an additive release device (32) for dispensing the liquid additive from said tank (13) into a fuel circulation circuit (1) for an internal combustion engine, the additive release device comprising a distribution channel (DC) and at least one actuator component (62) adapted for selectively sealing, totally or partially, said distribution channel, wherein at least for an open position of the actuator component (62), the distribution channel (DC) is in fluid communication with the additive tank (13) and opens into a fuel channel (52) of the cover (3) that has a larger cross-section than the distribution channel (CD);

**characterized in that** the additive release device (32) extends at least partially into the inner space (9), said actuator component (62) extending into this inner space (9) and preferably at a distance from the second end of the housing.

2. Filter according to claim 1, wherein the additive release device (32) is secured to a housing portion selected from among the cover (3) and the base (2a) and is fixed in translation along a longitudinal axis (A) of the filter element (4) relative to this housing portion.

3. Filter according to claim 1 or 2, comprising a sleeve (F) having a free end (35) adapted for connection to the additive tank (13), said sleeve (F) comprising:

   - a compartment (64) to accommodate the actuator component (62); and
   - a line (50) separate from the compartment (64) and extending between two axially opposite openings (50a, 50b), one of the two opposite openings (50a) placing the line (50) in communication with the fuel channel (52) of the cover (3).

4. Filter according to claim 3, wherein the additive release device (32) comprises an additive transport tube that defines a portion of the distribution channel (DC), the transport tube (66) being inserted into an additive passage of the actuator component (62),
   and wherein at least one annular gasket (J3, J4) is mounted on the transport tube (66) to create a seal between the compartment (64) and the fuel channel (52) of the cover (3),
   and wherein at least one annular gasket (J5) is mounted on the actuator component (62) to create a seal between the compartment (64) and the distribution channel (DC).

5. Filter according to claim 3 or 4, wherein:

   - the filter element (4) defines an upstream area (Z1) in communication with the unfiltered fuel inlet (3a), and a downstream area (Z2) in communication with the filtered fuel outlet (3b);
   - the downstream area (Z2) comprises, in the inner space (9), a first sub-area (Z21) internal to the sleeve (F) which is defined by said line (50) and a second sub-area (Z22) external to the sleeve (F) which extends annularly between the inner face (5b) of the filter medium (5) and an outer face of the sleeve (F).

6. Filter according to any preceding claim, wherein the unfiltered fuel inlet (3a) and the filtered fuel outlet (3b) are arranged at a distance from said base (2a), the distribution channel (DC) defining a liquid additive dispensing port (34) which opens into said fuel channel (52) of the cover (3), the additive dispensing port (34) being separate from the fuel inlet and outlet ports (3a, 3b).

7. Filter according to claim 6, wherein the fuel channel (52) of the cover (3) comprises a venturi (22) to generate a pressure difference between the fuel inlet (3a) or outlet (3b) port and the additive dispensing port (34).

8. Filter according to any preceding claim, wherein the fuel channel (52) of the cover (3) is in communication with the inner space (9) via at least one line (50) traversing the first axial end of the filter element (4), said fuel channel (52) being delimited by a molded plastic part (53) which comprises:

   - an upper face (53a), optionally covered by an outer wall of the cover (3) which provides at least one among the inlet port (3a) and outlet port (3b); and
   - a lower face (53b) from which a tube (53c) protrudes in a direction parallel to a longitudinal axis (A) of the filter element (4), said tube (53c) defining with the second axial end (6) of the filter element (4) an annular cover/filter element sealing area.

9. Filter according to any preceding claim, wherein said fuel channel (52) of the cover (3) is in communication with the filtered fuel outlet (3b) and comprises:

   - an inlet passage (52a) which is in communication with the inner space (9) and opens near the first axial end (6) of the filter element (4); and
   - a lateral passage (52b), positioned between the inlet passage (52a) and the filtered fuel outlet (3b),

   and wherein the additive tank (13) is part of an additive chamber (E) and defines, with an outer casing (12) of said chamber (E), a peripheral volume (V3) which is in fluidtight communication with said lateral passage (52b).

10. Filter according to claim 9, wherein the liquid additive tank (13) has at least one movable and fluidtight wall (P) between an internal volume (V2) of the additive tank and the peripheral volume (V3) defined by the outer casing (12), said movable wall (P) providing a sealed separation and contributing to maintaining an identical pressure between the additive in the additive tank (13) and the fuel in the peripheral volume (V3).

11. Filter according to claim 9 or 10, comprising in the inner space (9), parallel to the distribution channel (DC), a pressure-balancing line (50) which is in communication with the fuel channel (52) of the cover (3) and extends to the vicinity of the second axial end (7) of the filter element (4) so as to be in communication with said peripheral volume (V3).

12. Filter according to claim 11 when dependent on claim 5, wherein the pressure-balancing line (50) opens into the fuel channel (52) via the lateral passage (52b) and is sealingly separated from the second sub-area (Z22) by a fluidtight annular contact between the sleeve (F) and a sealing surface, preferably an annular lip (24d), formed on the outer casing (12), whereby the pressure in the peripheral volume (V3) corresponds to the pressure in the lateral passage (52b).

13. Filter according to any preceding claim, wherein the housing (2, 3) comprises:

   - a bowl (2) comprising the base (2a) and adapted to accommodate the additive tank (13); and
   - said cover (3) which comprises a sealing portion (30) covering the bowl (2) and an insertion portion (31) extending into the inner space (9), the sealing portion (30) including the inlet port (3a) for unfiltered fuel and the outlet port (3b) for filtered fuel;

   and wherein the insertion portion (31) comprises the distribution channel (DC), said actuator component (62), and a connecting endpiece (35) formed opposite to the sealing portion (30), the connecting endpiece (35) being adapted for connection to the additive tank (13) in a fluidtight seal.

14. Filter according to claim 13, wherein the additive release device (32) is intended to be mounted with the cover (3) on the fuel circulation circuit (1), and wherein the insertion portion (31) has a generally tubular shape, the filter element (4) being removably mounted around the insertion portion (31).

15. Filter according to claim 13 or 14, wherein the filter element comprises:

   - a flange (6, 7) at each of the first and second axial ends; and
   - a reinforcing member (8), preferably tubular, to protect the inner face (5b) of the filter medium (5).

16. Filter according to any preceding claim, wherein the actuator component (62) comprises a sealing member which is moved according to an electrical command received by the additive release device (32).

17. Fuel filter according to any preceding claim, comprising at least one heating device configured to heat the additive upstream of the dispensing port (34).

**FIG. 1**

FIG. 2

FIG. 3

FIG. 4

FIG. 5

FIG. 6

FIG. 7

FIG. 8

FIG. 9

**FIG. 10**

**FIG. 11A**

**FIG. 11B**

**EP 3 079 792 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012104552 A
- EP 671205 A
- WO 9719022 A
- WO 0110545 A
- WO 03053560 A
- WO 2012084838 A
- WO 2012084851 A
- WO 2010150040 A
- WO 2012084906 A
- WO 2012097937 A